# EUROPEAN PATENT SPECIFICATION

(11) **EP 1 689 892 B1**
(45) Date of publication and mention of the grant of the patent: **13.10.2010**
(21) Application number: 04808323.2
(22) Date of filing: 06.12.2004
(51) Int. Cl.: C21B 13/00

(54) **AN APPARATUS FOR MANUFACTURING A MOLTEN IRON DIRECTLY USING FINE OR LUMP COALS AND FINE IRON ORES, THE METHOD THEREOF, THE INTEGRATED STEEL MILL USING THE SAME AND THE METHOD THEREOF**
VORRICHTUNG ZUR DIREKTEN HERSTELLUNG VON SCHMELZFLÜSSIGEM EISEN UNTER VERWENDUNG VON FEIN- ODER GROBKOHLE UND FEINEN EISENERZEN, VERFAHREN DAFÜR, INETGRIERTES STAHLWERK DAMIT UND VERFAHREN DAFÜR
APPAREIL DESTINE A LA PRODUCTION DE FONTE LIQUIDE AU MOYEN DE BLOCS OU DE FINS MORCEAUX DE CHARBON ET DE FINS MINERAIS DE FER, PROCEDE ASSOCIE, ACIERIE INTEGREE FAISANT INTERVENIR CET APPAREIL ET PROCEDE ASSOCIE

(30) Priority: 05.12.2003 KR 2003088033; 05.12.2003 KR 2003088035; 03.12.2004 KR 2004101147
(43) Date of publication of application: 16.08.2006
(73) Proprietor: Posco, Pohang-shi, Kyungsangbuk-do 790-300 (KR); Voest-Alpine Industrieanlagenbau GmbH & Co, 4031 Linz (AT)
(72) Inventor: KANG, Chang Oh, Pohang-shi, Kyungsangbuk-do 790-300 (KR); KIM, Deuk Chae, c/o Posco, Pohang-shi, Kyungsangbuk-do 790-360 (KR); LEE, Hoo Geun, c/o Posco, Pohang-shi, Kyungsangbuk-do 790-360 (KR); JOO, Sang Hoon, c/o Posco, Pohang, Kyungsangbuk-do 790-360 (KR); SHIN, Myoung Kyun, c/o Posco, Pohang-shi, Kyungsangbuk-do 790-360 (KR); KIM, Jin Tae, c/o Posco, Pohang-shi, Kyungsangbuk-do 790-360 (KR); LEE, Gu, c/o Posco, Pohang-shi, Kyungsangbuk-do 790-360 (KR); KIM, Sang Hyun, c/o Posco, Pohang-shi, Kyungsangbuk-do 790-360 (KR); KIM, Wan Gi, c/o Posco, Pohang-shi, Kyungsangbuk-do 790-360 (KR); EDER, Thomas, 4031 Linz (AT); HAUZENBERGER, Franz, 4031 Linz (AT); MILLNER, Robert, 4031 Linz (AT); SCHENK, Johannes, 4031 Linz (AT); SCHMIDT, Martin, 4031 Linz (AT); WIEDER, Kurt, 4031 Linz (AT); WURM, Johann, 4031 Linz (AT); ZEHETBAUER, Karl, 4031 Linz (AT)
(74) Representative: Schwarz & Partner
(86) International application number: PCT/KR2004/003192
(87) International publication number: WO 2005/054520

(56) References cited:
- EP-A- 0 571 358
- WO-A-03/056039
- JP-A- 4 136 111
- JP-A- 63 011 610
- JP-A- 2002 097 507
- US-A- 6 063 155
- US-A1- 2003 159 541
- US-B1- 6 210 627
- US-B1- 6 235 082
- US-B1- 6 332 911

## Description

### BACKGROUND OF THE INVENTION

### (a) Field of the Invention

The present invention relates to an apparatus for manufacturing molten iron, a method thereof, an integrated steel mill using the same, and a method thereof, and more particularly, to an apparatus for manufacturing molten iron directly using fine or lump coals and fine iron-containing ores, a method thereof, an integrated steel mill using the same, and a method thereof.

### (b) Description of the Related Art

Iron and steel industry is a core industry that supplies the basic materials needed in construction and in the manufacture of automobiles, ships, home appliances, etc. Further, it is an industry which has advanced since the dawn of human history. Iron works, which play a pivotal roll in the iron and steel industry, produce steel from the molten iron, and then supply it to customers after producing molten iron (i.e., pig iron in a molten state) using iron ores and coals as raw materials.

Nowadays, approximately 60% of the world's iron production is produced using the blast furnace method that has been developed since the 14th century. According to the blast furnace method, coke produced using iron ore and bituminous coal as raw materials that went through a sintering process are placed in a blast furnace and oxygen is supplied to the furnace to reduce the iron ore to iron, thereby manufacturing molten iron. The blast furnace method which most of molten iron production employ requires that raw materials have a hardness of at least a predetermined level and grain size that can ensure ventilation property in the furnace, taking into account reaction characteristics. For that reason, coke that is obtained by processing specific raw coal is needed as a carbon source to be used as fuel and a reducing agent. Also, sintered ore that went through a successive agglomerating process is needed as an iron source. Accordingly, the modern blast furnace method requires raw material preliminary processing equipment such as coke manufacturing equipment and sintering equipment. Furthermore, it is necessary to be equipped with subsidiary facility, in addition to the blast furnace, and equipments for preventing and minimizing pollution generated by subsidiary facilities. Therefore, the heavy investment in additional facilities and equipments leads to increasing manufacturing costs.

In order to solve these problems with the blast furnace method, significant effort is made in iron works all over the world to develop a smelting reduction process that produces molten iron by using directly fine coals, as fuel and a reducing agent, and using as iron sources, directly fine ores which account for more than 80% of the world's ore production.

As an example of such a smelting reduction process, a method of manufacturing the molten iron using fine iron ores and lump coals is disclosed in US Patent No. 5,534,064. Here, the whole apparatus is comprised of a multi-stage fluidized-bed type reactor and a packed bed type melter-gasifier that is connected to a final stage of the multi-stage fluidized-bed reactor unit, such that fine iron-source can be directly used due to a characteristic of the fluidized-bed of the fluidized-bed type reactor unit. However, since it is necessary to secure a predetermined space inside the packed bed of the melter-gasifier, a range of grain size of coals, which are directly input into the melter-gasifier, is limited. Further, the fine coal source reduced in the multi-stage fluidized-bed reactor unit has to be continuously input into the melter-gasifier. So, there is a need for a special charging method. Specifically, since a permissible range of grain size of coal, which is used as fuel and a reducing agent, is limited, a significant amount of fine coals which are generated during coal mining, transportation, and open-air storage cannot be used. Further, in the process of operating a packed bed type reactor unit, a significant amount of fine iron source cannot be used as an iron source. Furthermore, in the process of operating a fluidized-bed type reactor unit, it is needed to provide additional apparatus for continuously charging fine reduced iron discharged from the fluidized-bed type reactor unit into the melter-gasifier.

US Patent No. 5,961,690 discloses a method of manufacturing the whole product of molten pig iron or molten steel and a plant for implementing the method. Here, an apparatus for manufacturing molten iron by connecting a multi-stage fluidizing-bed reactor unit and a melter-gasifier while preventing sticking and a method thereof are disclosed. Here, part of reducing gas flow, which flows from a final reactor to a pre-reducing reactor, is divided, and is cooled to a room temperature and compressed. Then, the divided reducing gas is re-supplied to the final reactor after removing CO₂ contained in the divided reducing gas in order to increase an amount of the reducing gas and thereby reduce iron ore. At this time, a temperature of the gas to be supplied to a final reactor is raised by an additional heater to a predetermined temperature before it is supplied to the final reactor, thereby keeping a temperature inside the final reactor.

Further, as a method of raising a temperature of room-temperature-reducing gas, a heat-exchanging scheme in which a temperature is raised by contact with high-temperature gas additionally supplied or a self temperature-raising scheme is considered. In the self temperature-raising scheme, part of room-temperature-reducing gas is combusted and combustion heat thereof is used to raise the temperature of the reducing gas. However, in the heat-exchange scheme, additional gas is needed to generate high-temperature gas. In the self temperature-raising scheme, an amount of reducing gas components such as CO, H₂, etc. existing in the reducing gas to be supplied to the final reactor decreases due to the combustion of part of the room-temperature gas. Further, in both of the schemes, the temperature of room-temperature gas has to be directly raised, such that a heat efficiency decreases during the time of raising the temperature, thereby increasing an amount of energy consumption during the process.

In the US Patent No. 5,961,690, a method of cooling down exhaust gas from the melter-gasifier to a temperature suitable for its supply to the final reactor is also disclosed. In the method, part of the reducing gas which is to be re-supplied to the final reactor is divided before being heated and then mixed with the exhaust gas from the melter-gasifier.

On the other hand, tar and dust, which are generated by heating coals and removing volatile matters therefrom at the upper portion of the melter-gasifier during a practical operation, sequentially pass through the multi-stage fluidized-bed reactor unit, along with the reducing gas discharged from the melter-gasifier. In this case, the tar is gradually pyrolyzed in the reducing gas and disappears. The dust is introduced into fine ore flow sequentially passing through the multi-stage fluidized-bed reactor unit while traversing the reducing gas in each of the reactors and is again circulated into the melter-gasifier Therefore, amounts of dust and tar contained in the reducing gas decreases while they pass through the multi-stage fluidized-bed reactor unit.

However, in the apparatus and the method disclosed in the US Patent No. 5,961,690, since the reducing gas flow divided from the final reactor passes through only one fluidized-bed, the reducing gas contains a large amount of tar and dust. Therefore, during the process of cooling down the divided reducing gas and of removing CO₂ therefrom and compressing it, tar contained in the reducing gas condenses on devices provided as apparatus for cooling the reducing gas and for removing CO₂ and condensing it, which leads to making mechanical trouble during operation. Further, in the apparatus and the method disclosed in the US Patent No. 5,961,690, since there is needed to provide a cooling apparatus using water for cooling down the divided high-temperature reducing gas in addition to a cooling apparatus using water for cooling down gas which is finally discharged from the multi-stage fluidized-bed reactor unit, whereby an amount of used cooling water is increased and load is excessively applied to all the processes.

### SUMMARY OF THE INVENTION

The present invention has been made to solve the above-mentioned problems, and an object of the invention is to provide an apparatus for manufacturing molten iron which uses fine or lump coals and fine iron-containing ores and which can excellently keep a reduction ratio of iron-containing ores during the time of gas-reducing iron-containing ores using reducing coal gas generated from coal, and a manufacturing method thereof.

Further, another object of the invention is to provide an integrated steel mill using the above-described apparatus for manufacturing molten iron and the method thereof, and a method thereof, thereby providing hot-rolled steel plate having an excellent quality while compactly installing all the apparatuses and processes.

The invention is defined in the claims.

According to an aspect of the invention to achieve the above-mentioned object, there is provided a method of manufacturing molten iron, comprising the steps of: manufacturing iron-containing mixture by mixing fine iron-containing ores and supplementary raw materials and by drying the resultant mixture; converting the iron-containing mixture to a reduced material by reducing and sintering while passing the iron-containing mixture through a multi-stage fluidized-bed reactor unit, of which reactors are sequentially connected to each other; manufacturing briquettes by briquetting the reduced material at high temperature; forming a coal packed bed by charging lump coals and briquettes which are made by briquetting fine coals, into a melter-gasifier as heat sources for melting the briquettes; manufacturing molten iron by charging the briquettes into the melter-gasifier connected to the multi-stage fluidized-bed reactor unit and by supplying oxygen into the melter-gasifier; and supplying reducing coal-gas exhausted from the melter-gasifier into the fluidized-bed reactor unit.

Further, the method of manufacturing molten iron further comprises the steps of: dividing the exhaust gas flow which is exhausted through the multi-stage fluidized-bed reactor unit and removing CO₂ from the exhaust gas; mixing the reformed exhaust gas from which CO₂ is removed with the reducing coal gas which is exhausted from the melter-gasifier; and heating the reducing coal gas mixed with the reformed exhaust gas before supplying it to the multi-stage fluidized-bed reactor unit to adjust a temperature of the reducing coal gas to a temperature required to reduce the iron-containing mixture at the multi-stage fluidized-bed reactor unit.

The reformed exhaust gas may be heated using an oxygen burner at the heating step before supplying the reducing coal gas mixed with the reformed exhaust gas to the multi-stage fluidized-bed reactor unit.

In the step of dividing the exhaust gas-flow which is exhausted through the multi-stage fluidized-bed reactor unit and removing CO₂ from the exhaust gas, an amount of divided exhaust gas is preferably 60 volume% of a total amount of the exhaust gas which is exhausted from the multi-stage fluidized-red reactor unit.

The amount of the reformed exhaust gas may be maintained at a range of 1050 Nm³ to 1400 Nm³ per 1 ton of the fine iron-containing ores.

In the step of mixing the reformed exhaust gas from which CO₂ is removed with the reducing coal gas exhausted from the melter-gasifier, it is preferable that an amount of CO₂ contained in the reformed exhaust gas is 3.0 volume% or less.

The divided exhaust gas may be compressed at the step of dividing the exhaust gas flow exhausted from the multi-stage fluidized-bed reactor unit and removing CO₂ from the exhaust gas.

It is preferable to further comprise a step of dividing the exhaust gas flow which is exhausted through the multi-stage fluidized-bed reactor unit and removing tar from the exhaust gas, before the step of dividing the exhaust gas flow which is exhausted from the multi-stage fluidized-bed reactor unit and removing CO₂ from the exhaust gas.

In the step of mixing the reformed exhaust gas from which CO₂ is removed with the reducing coal gas which is exhausted from the melter-gasifier, the reformed exhaust gas is mixed at a front end of a cyclone which charges dust exhausted from the melter-gasifier into the melter-gasifier.

The reformed exhaust gas flow-from which CO₂ is removed may be divided and used as carrier gas for charging dust separated at the cyclone into the melter-gasifier.

The method of manufacturing molten iron according to the present invention, may further comprises a step of bypassing a total amount of exhaust gas which is exhausted from the multi-stage fluidized-bed reactor unit and supplying it to the multi-stage fluidized-bed reactor unit during the time of closing the melter-gasifier or before operating the melter-gasifier.

The method of manufacturing molten iron according to the present invention, may further comprises the steps of: dividing the exhaust gas flow which is exhausted through the multi-stage fluidized-bed reactor unit and removing CO₂ from the exhaust gas flow; and purging the multi-stage fluidized-bed reactor unit by dividing the reformed exhaust gas flow from which CO₂ is removed and by supplying the reformed exhaust gas to each of the fluidized-bed reactors.

It is preferable that an amount of nitrogen contained in the reducing coal gas is 10.0 volume% or less.

The method of manufacturing molten iron according to the present invention, may further comprises the steps of: dividing the exhaust gas flow which is exhausted through the multi-stage fluidized-bed reactor unit and removing CO₂ contained in the exhaust gas; and dividing the reformed exhaust gas flow from which CO₂ is removed and supplying it into the melter-gasifier together with oxygen during the time of supplying oxygen to the melter-gasifier.

The step of converting the iron-containing mixture to a reduced material may comprise: a first step of preheating the iron-containing mixture at a temperature of 400 to 500°C; a second step of re-preheating the preheated iron-containing mixture at a temperature of 600 to 700°C; a third step of pre-reducing the re-preheated iron-containing mixture at a temperature of 700 to 800°C; and a fourth step of finally reducing the pre-reduced iron-containing mixture at a temperature of 770 to 850°C.

A degree of oxidation at the first and second steps may be 25% or less, a degree of oxidation at third step may be 35 to 50%, and a degree of oxidation at fourth step may be 45% or more. Here, the degree of oxidation is obtained by a following equation: (CO₂ volume% + H₂O volume%)/(CO volume% + H₂ volume% + CO₂ volume% + H₂O volume%) x 100; CO, CO₂, H₂O and H₂ are gases, each of which is contained in the reducing gas.

The second and third steps may comprise a step of supplying oxygen.

In the step of manufacturing the briquettes at a high temperature, it is preferable that the grain size of the briquettes is within a range of 3 mm to 30 mm.

In the step of forming the coal packed bed, it is preferable that the grain size of the briquette is within a range of 30 mm to 50 mm.

An integrated steel manufacturing method according to the present invention comprises the steps of: manufacturing molten iron by the above-mentioned method of manufacturing molten iron; manufacturing molten steel by removing impurities and carbon contained in the molten iron; continuously casting the molten iron into thin slab; hot-rolling the thin slab to make hot-rolled steel plate.

In the step of continuously casting the molten iron into the thin slab, the molten steel may be continuously cast into the thin slab having a thickness of 40 mm to 100 mm.

In the step of hot-rolling the thin slab to make hot-rolled steel plate, the hot-rolled steel plate may have a thickness of 0.8 mm to 2.0 mm.

The step of manufacturing the molten steel may comprise the steps of: pre-treating the molten iron to remove phosphorus and sulfur contained in the molten iron; removing carbon and impurities contained in the molten iron by supplying oxygen into the molten iron; and manufacturing the molten steel by removing impurities and dissolved gas by way of secondary refining of the molten iron.

The integrated steel manufacturing method may further comprise the steps of: converting fine iron-containing ores to reduced iron by reducing the fine iron-containing ores while passing it through a multi-stage fluidized-bed reactor unit, of which reactors are sequentially connected to each other; and manufacturing reduced-iron briquettes by briquetting the reduced iron at a high temperature. In the step of removing carbon and impurities contained in the molten iron, the reduced-iron briquettes and the molten iron may be mixed, and carbon and impurities be removed therefrom.

The step of converting the fine iron-containing ores to the reduced iron may comprise the steps of: preheating the fine iron-containing ores at a temperature of 600 to 700°C; pre-reducing the preheated fine iron-containing ores at a temperature of 700 to 800°C; and final-reducing the pre-reduced fine iron-containing ores at a temperature of 770 to 850°C to convert it to reduced iron.

An apparatus for manufacturing molten iron according to the present invention comprises: a multi-stage fluidized-bed reactor unit for converting fine iron-containing ores which are mixed and dried and supplementary raw material to a reduced material; an briquette-manufacturing apparatus which is connected to the multi-stage fluidized-bed reactor unit and which manufactures briquettes by briquetting the reduced material at a high temperature; a briquetter for manufacturing briquettes which are used as a heat source by briquetting fine coals; a melter-gasifier for manufacturing molten steel, into which lump coals and the briquettes manufactured from the briquetter are input and a coal packed bed is formed, into which the reduced material is charged from the briquette-manufacturing apparatus and oxygen is supplied; and a reducing-coal-gas supply tube for supplying the reducing-coal-gas exhausted from the melter-gasifier to the multi-stage fluidized-bed reactor unit.

The apparatus for manufacturing molten iron according to the present invention further comprises a reformed-exhaust-gas supply tube which divides the exhaust gas flow which is exhausted from the multi-stage fluidized-bed reactor unit and supplies reformed exhaust gas from which CO₂ is removed. An oxygen burner may be mounted on the reducing-coal-gas supply tube for heating the reducing coal gas mixed with the reformed exhaust gas, before supplying it to the multi-stage fluidized-bed reactor unit.

It is preferable that the reformed exhaust gas supply tube includes a gas reformer for removing CO₂ from the exhaust gas, which is exhausted through the multi-stage fluidized-bed reactor unit and is divided.

It is preferable that the reformed exhaust gas supply tube includes a tar remover for removing tar from the exhaust gas, which is exhausted through the multi-stage fluidized-bed reactor unit and is divided.

It is preferable that the reformed exhaust gas supply tube includes a compressor for compressing the exhaust gas, which is exhausted through the multi-stage fluidized-bed reactor unit and is divided, and that the tar remover is mounted on a front end of the compressor.

A cyclone, which charges dust exhausted from the melter-gasifier into the melter-gasifier, may be provided to the melter-gasifier The reformed-exhaust-gas supply tube may be connected to a front end of the cyclone.

A transportation gas tube, by which the reformed exhaust gas from which CO₂ is removed is divided and through which the reformed exhaust gas is supplied to the melter-gasifier as carrier gas for transporting dust separated in the cyclone, may be connected to the rear end of the cyclone.

The multi-stage fluidized-bed reactor unit may comprise a first preheating reactor which preheats the iron-containing mixture at a temperature of 400 to 500°C; a second preheating reactor which is connected to the first preheating reactor and which re-preheats the preheated iron-containing mixture at a temperature of 600 to 700°C; a pre-reducing reactor which is connected to the second preheating reactor and which pre-reduces the re-preheated iron-containing mixture at a temperature of 700 to 800°C; and a final reducing reactor which is connected to the pre-reducing reactor and which finally reduces the pre-reduced iron-containing mixture at a temperature of 770 to 850°C.

Oxygen burners may be disposed between the second pre-heating furnace and the pre-reducing reactor and between the pre-reducing furnace and the final reducing reactor, and supply the reducing coal gas to each of the second pre-heating reactor and the pre-reducing reactor after heating the reducing coal gas.

It is preferable that the reducing-coal-gas supply tube may be connected to the final reducing reactor.

The apparatus for manufacturing molten iron according to the present invention may further comprise a purging-coal-gas supply tube for purging the multi-stage fluidized-bed reactor unit by dividing the reformed exhaust gas flow from which CO₂ is removed and by supplying the reformed exhaust gas to each of the fluidized-bed reactors.

The apparatus for manufacturing molten iron according to the present invention may further comprise an exhaust-gas-bypassing circulation tube which is connected to the multi-stage fluidized-bed reactor unit and which supplies the total amount of exhaust gas exhausted from the multi-stage fluidized-bed reactor unit to the multi-stage fluidized-bed reactor unit.

The apparatus for manufacturing molten steel according to the present invention may further comprise a coal gas re-supplying tube which divides reformed exhaust gas flow from which CO₂ is removed and supplies it into the melter-gasifier together with oxygen during supplying oxygen thereto.

An integrated steel mill according to the present invention comprises the above-mentioned apparatus for manufacturing molten iron, an apparatus for manufacturing steel, which is connected to the apparatus for manufacturing molten steel and which manufactures molten steel by removing impurities and carbon from the molten iron; a thin slab casting machine which is connected to the apparatus for manufacturing steel and which continuously casts the molten steel supplied from the apparatus into thin slab; a hot-rolling machine which is connected to the thin slab casting machine and which manufactures hot-rolled plate by hot-rolling the thin slab discharged from the thin slab casting machine.

The apparatus for manufacturing steel may comprises: an molten-iron pre-treating apparatus which is connected to the apparatus for manufacturing molten iron and which removes phosphorus and sulfur contained in the molten iron discharged form the apparatus; a decarbonization apparatus which is connected to the molten iron pre-treating apparatus and which removes carbon and impurities contained in the molten iron discharged from the molten iron pre-treating apparatus; and a ladle which is connected to the decarbonization apparatus and which manufactures molten steel by refining again the molten iron discharged from the decarbonization apparatus.

The integrated steel mill according to the present invention, may further comprise a second multi-stage fluidized-bed reactor unit which divides reformed discharged gas from which CO₂ is removed and which converts fine iron-containing ores to a reduced material; and a second briquette-manufacturing apparatus which is connected to the first multi-stage fluidized-bed reactor unit and which manufactures briquettes by briquetting the reduced material at a high temperature. The second briquette-manufacturing apparatus may supply the reduced iron briquettes to a decarbonization apparatus.

The second multi-stage fluidized-bed reactor unit may comprises: a preheating reactor for preheating the fine iron-containing ores at a temperature of 600 to 700°C; a pre-reducing reactor which is connected to the pre-heating reactor and pre-reduces the preheated fine iron-containing ores at a temperature of 700 to 800°C; and a final reducing reactor which is connected to the pre-reducing reactor and finally reduces the pre-reduced fine iron-containing ores at a temperature of 770 to 850°C.

### BRIEF DESCRIPTION OF THE DRAWING

The above and other features and advantages of the present invention will become more apparent by describing in detail exemplary embodiments thereof with reference to the attached drawings in which:
Fig. 1 is schematic diagram illustrating an apparatus for manufacturing molten iron according to an embodiment of the present invention;
Fig. 2 is a graph illustrating a relationship between an appropriate amount of high-temperature-reducing gas and an amount of high-temperature-reducing gas generated in a melter-gasifier;
Fig. 3 is a schematic diagram illustrating a circulation process of circulating reducing coal gas in the apparatus for manufacturing molten iron according to the embodiment of the present invention;
Fig. 4 is a schematic diagram illustrating a circulation process of circulating reducing coal gas after closing a melter-gasifier in the apparatus for manufacturing molten iron according to the embodiment of the present invention;
Fig. 5 is a schematic diagram illustrating a purge process of purging the apparatus for manufacturing molten iron according to the embodiment of the present invention;
Fig. 6 is a graph illustrating relationship between a degree of oxidation depending on temperatures and Fe mixture inside multi-stage fluidized-bed reactor unit of the apparatus for manufacturing molten iron according to the embodiment of the present invention;
Fig. 7 is a view illustrating an embodiment of an integrated steel mill employing the apparatus for manufacturing molten iron according to the embodiment of the present invention; and
Fig. 8 is a view illustrating another embodiment of the integrated steel mill employing the apparatus for manufacturing molten iron according to the embodiment of the present invention.

### DETAILED DESCRIPTION OF THE PREFERRED EMBODIMENTS

Now, exemplary embodiments of the present invention will be described with reference to the attached drawings. However, the present invention can be embodied in various modifications and thus is not limited to the embodiments described below.

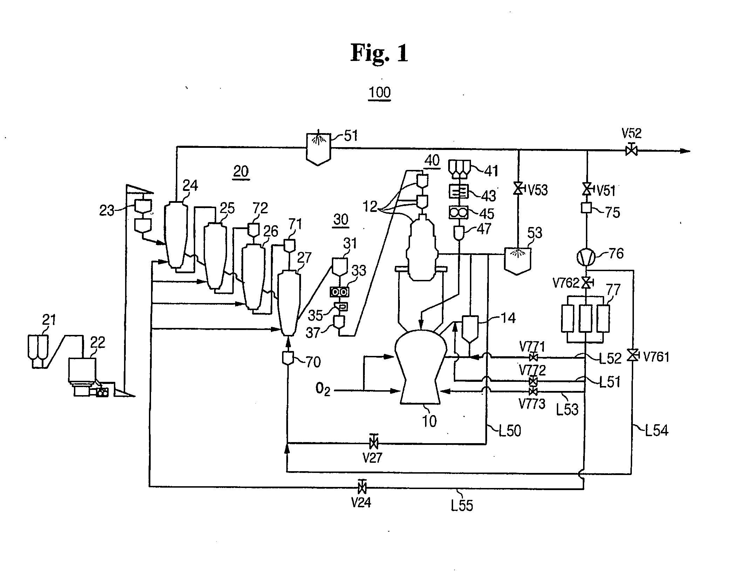

Fig. 1 is a diagram schematically illustrating an apparatus 100 for manufacturing molten iron according to an embodiment of the present invention, which uses directly fine or lump coals and fine iron-containing ores.

The apparatus 100 for manufacturing molten iron according to the embodiment of the present invention comprises a melter-gasifier 10, a multi-stage fluidized-bed reactor unit 20, a briquette-manufacturing apparatus 30 for manufacturing briquettes, a briquetter 40 for manufacturing briquettes, and a reducing-coal-gas supply tube L50 as main components. The apparatus 100 may comprise other subsidiary facility as needed.

As shown in Fig. 1, in the apparatus 100 for manufacturing molten iron according to the embodiment of the present invention, room-temperature-fine ores containing iron and supplementary raw materials having a grain size of 8 mm or less are temporarily stored at a hopper 21, then they are mixed to produce iron-containing mixture. The resultant mixture is dried at a dryer 22, and then is charged into a first preheating reactor 24 of the multi-stage fluidized-bed reactor unit 20. A uniform-pressure charging apparatus 23 is provided between the drier 22 and the first preheating reactor 24, such that the mixture at a normal pressure can be charged into the multi-stage fluidized-bed reactor unit 20 which is maintained within a range of 1.5 to 3 atmospheres.

The iron-containing mixture is in contact with a reducing gas flow discharged from the melter-gasifier 10 and is reduced to about 90% which is a target reduction ratio while sequentially passing through the first preheating reactor 24, a second preheating reactor 25, a pre-reducing reactor 26, and a final reducing reactor 27, which are connected in this order. A temperature of the iron-containing mixture is raised at more than 800°C while it is reduced by the contact with the reducing-coal-gas flow and the iron-containing mixture is converted to a high-temperature-reduced material while more than 30% of the supplementary raw materials in the iron-containing mixture is sintered. The multi-stage fluidized-bed reactor unit 20 is embodied for four stages. However, the number of the fluidized-bed reactors is for illustrative purpose only and is not meant to restrict the present invention. Accordingly, the fluidized-bed reactor unit 20 needs to be embodied only for multi-stages.

The reduced material which is reduced by the above-mentioned method has a mean grain size of about 2.0 mm. The direct charging of the reduced material into the melter-gasifier 10 brings about a significant scatter loss and deterioration of a ventilation property of coal packed bed in the melter-gasifier 10. Therefore, the reduced material discharged from the final reactor 27 is transferred to the briquette-manufacturing apparatus 30 which is connected to the final reducing reactor 27. Here, since the pressure inside the final reducing reactor 27 is maintained at 3 atmospheres and the pressure inside the briquette-manufacturing apparatus 30 is maintained at normal pressure, the reduced material is transferred from the final reducing reactor 27 to the briquette -manufacturing apparatus 30 due to the pressure difference.

In the briquette-manufacturing apparatus 30, the high-temperature reduced material passed through the final reducing reactor 27 is temporarily stored at a charging hopper 31 and is mechanically pressure-formed into briquettes having the shape of strip while it is passed between a pair of rolls at a high temperature. Next, the briquettes having the shape of strip are crushed by a crusher 35 to have a size appropriate for charging it into the melter-gasifier 10 and the crushed briquettes are stored at a storage bin 37. The briquettes are directly briquetted at a high temperature to have predetermined strength and size. It is preferable that the grain size of the briquette is 3 to 30 mm, and density is about 3.5 to 4.2 tons/m³. When the grain size of the briquette is less than 3 mm, the ventilation property deteriorates at the time of being charged into the melter-gasifier 10. When the grain size of the briquettes is larger than 30 mm, it is difficult to manufacture the briquettes and hot-strength deteriorates. The briquettes temporarily stored at the storage bin 37 is continuously charged into the melter-gasifier 10 via the high-temperature uniform-pressure charging apparatus 12 which allows the briquettes at a normal pressure to be charged into the melter-gasifier 10 maintained within a range of 3.0 to 3.5 atmospheres.

On the other hand, a coal packed bed is formed inside the melter-gasifier 10, as a heat source to melt the briquettes. Raw coals to form the coal packed bed inside the melter-gasifier 10 need to have a grain size of 10 to 50 mm. Lump coals having such a grain size are directly into the melter-gasifier 10. On the other hand, remaining fine coals go through a particle-size sorting process. The briquetter 40 crushes the fine coals having a grain size of 10 mm or less among the fine coals stored in the storage hopper 41, into fine coals having a grain size of 4 mm or less. The crushed fine coals are mixed with an appropriate amount of binder and addictives by mixer 43. Resultant mixture is transported to a briquetter 45 and is mechanically pressure-formed into briquettes. In this case, it is preferable that the grain size of the briquette is about 30 to 50 mm and density thereof is 0.8 tons/m³. When the grain size of the briquette is less than 30 mm, the ventilation property inside the melter-gasifier 10 deteriorates. When the grain size of the briquette is larger than 50 mm, it is difficult to manufacture the briquettes and warm-strength deteriorates. The pressure-formed briquettes are stored in a storage bin 47.

The briquettes stored in the storage bin 47 are charged into the melter-gasifier 10 together with lump coals to form coal packed bed. The briquettes charged into the melter-gasifier 10 are gasified by pyrolysis reaction which occurs at the upper side of the coal packed bed and by combustion reaction which occurs at the lower side of the coal packed bed by use of oxygen. High-temperature-reducing gas generated at the melter-gasifier 10 by the gasification reaction is supplied to the multi-stage fluidized-bed reactor unit 20 via the reducing-coal-gas supply tube L50 which is connected to a rear end of the final reducing reactor 27. The high-temperature reducing gas is utilized as a reducing agent and fluidized gas. The reducing coal gas reduces and sinters the iron-containing mixture while sequentially flowing through the final reducing reactor 27, the pre-reducing reactor 26, the second preheating 25, and the first preheating reactor 24. The reducing coal gas is exhausted from the first preheating reactor 24 and is dusted and cooled while flowing through a dust collector 51 using water.

A dome-shaped empty space is formed above the coal packed bed of the melter-gasifier 10, thereby reducing a gas flow rate. As a result, it is possible to prevent fine coals contained in the briquette and fine coals generated due to the abruptly-rising temperature of the coal which is charged into the melter-gasifier 10 from being discharged out of the melter-gasifier 10 in large quantities. Further, the dome-shaped empty space absorbs variation in pressure in the melter-gasifier 10 that is caused by irregular changes in the amount of gas as a result of directly using coal. The coal is gasified and volatile matters are removed from the coal while it drops to the bottom of the coal packed bed, and is ultimately burned by oxygen supplied through tuyeres at the bottom of the melter-gasifier. While generated combustion gas rises through the coal packed bed, it is converted to high-temperature-reducing gas and is exhausted outside the melter-gasifier 10. Part of the combustion gas is dusted and cooled while passing through a dust collector 53 using water such that pressure applied to the melter-gasifier 10 is maintained within a range of 3.0 to 3.5 atmospheres. Further, reduced iron is finally reduced and melted by the reducing gas and combustion heat generated by the coal gasification and combustion while dropping in the coal packed bed together with the coal, and then the resultant molten iron is discharged outside.

A cyclone 14 is mounted on the melter-gasifier 10 for collecting dust discharged outside. The cyclone 14 collects the exhaust gas generated at the melter-gasifier 10 and again supplies the collected dust to the melter-gasifier 10. Further, the cyclone 14 supplies, as reducing coal gas, the collected exhaust gas to the fluidized-bed reducing reactor unit 20. Carrier gas is supplied to the rear end of the cyclone 14 for supplying dust separated at the cyclone 14 into the melter-gasifier 10.

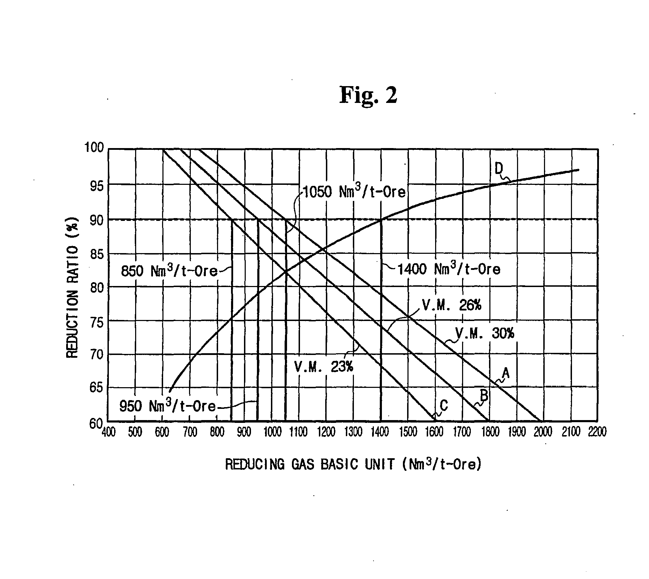

On the other hand, the apparatus 100 for manufacturing molten iron according to the embodiment of the present invention comprises apparatus for supplementing reducing coal gas, when an amount of the high-temperature-reducing coal gas generated from the melter-gasifier 10 is insufficient due to a variation in operating condition and a variation of coal quality, compared to an appropriate amount of high-temperature-reducing gas which has to be supplied to the multi-stage fluidized-bed reactor unit 20. A process of supplementing the reducing coal gas will be described in detail with reference to Fig. 2.

Fig. 2 is a graph illustrating a relationship between the appropriate amount of high-temperature-reducing gas and the amount of high-temperature-reducing gas generated in a melter-gasifier, in which the insufficient amount of high-temperature reducing gas on the basis of reduction ratio of 90% is shown.

Due to the variations in operating condition in the melter-gasifier 10 (shown in Fig. 1) and in the coal property, the amount of the high-temperature-reducing coal gas generated from the melter-gasifier 10 may be insufficient, compared to the appropriate amount of high-temperature reducing gas which has to be supplied to the multi-stage fluidized-bed reactor unit 20 (shown in Fig. 1). At this time, the operating condition of the multi-stage fluidized-bed reactor unit 20 is adjusted to prevent a deterioration in the reduction ratio of fine reduced iron passed through the multi-stage fluidized-bed reactor unit 20 and a phenomenon in which heat inside the melter-gasifier 10 becomes insufficient due to smelting of reduced iron with low reduction ratio.

In Fig. 2, a curved line D represents a relationship between the reduction ratio and a gas basic unit. Curved lines A to C represent a relationship between reduction ratio and an amount of gas generated in the melter-gasifier 10 which is converted into the gas basic unit, depending on an amount of volatile matters contained in the coal.

For example, when a target reduction ratio is 90%, an amount of the reducing coal gas needed is 1400 Nm³ per 1 ton of the fine iron-containing ores in the curved line D. On the contrary, when each amount of the volatile matters contained in the coal is 23%, 26%, and 30%, each amount of reducing coal gas is 850 Nm³, 950 Nm³, and 1050 Nm³ per 1 ton of the fine iron-containing ores, such that 550 Nm³, 450 Nm³, and 350 Nm³ are needed in respective cases. When the iron containing mixture is reduced in multi-stage fluidized-bed reactor unit 20 in a state in which the reducing coal gas is insufficient, the molten iron having a desired property cannot be obtained. Therefore, the desired reduction ratio of the reduced material can be obtained by supplementing the amount of reducing coal gas.

The apparatus 100 for manufacturing molten iron shown in Fig. 1 further comprises a reformed-exhausted-gas supply tube L51 which divides the exhaust gas flow which is exhausted from the multi-stage fluidized-bed reactor unit 20 and supplies reformed exhaust gas from which CO₂ is removed. The reformed-exhaust-gas supply tube L51 is provided with a compressor 76 and a gas reformer 77 for removing CO₂ contained in the exhaust gas exhausted from the first preheating reactor 24. Further, a tar remover is provided at a front end of the compressor 76 and removes a small amount tar contained in the gas, which is supplied to the compressor 76, thereby preventing the tar from condensing inside the compressor 76.

In the apparatus 100 for manufacturing molten iron, part of exhaust gas flow exhausted from the first preheating reactor 24 and passed through the dust collector 51 using water is divided and is passed through the tar remover 75. Then, the exhaust gas is compressed by the compressor 76 and is reformed through the gas reformer 77. The reformed exhaust gas is finally supplied to the multi-stage fluidized-bed reactor unit 20 via a valve V772 to supplement an insufficient amount of the reducing coal gas. In this case, the reformed exhaust gas is supplied to the multi-stage fluidized-bed reactor unit 20 after being mixed with the reducing coal gas. Since a temperature of the reducing coal gas decreases after being mixed with the exhaust gas, the mixed gas is heated to a temperature needed for reduction by using an oxygen burner 70 provided to the reducing-coal-gas supply tube L50 before the mixed gas is supplied to the multi-stage fluidized-bed reactor unit 20. Following various effects can be obtained through the above-described processes.

First, the reformed-exhaust-gas supply tube L51 is connected to the front end of the cyclone 14 and room-temperature-reformed exhaust gas is supplied to the cyclone 14, thereby preventing the cyclone 14 from being overheated. Therefore, the cyclone 14 effectively collects the dust exhausted from the melter-gasifier 10, thereby preventing the dust from being scattered.

Since the high-temperature-reducing coal gas exhausted from the melter-gasifier 10 is mixed with the room-temperature-reformed exhaust gas, the temperature of the reducing coal gas is lower than the temperature needed for its supply to the multi-stage fluidized-bed reactor unit 20. As a result, it is difficult to obtain the desired reduction ratio of the reduced material. Therefore, the reduction ratio of the reduced material is raised by adjusting the temperature of the reducing coal gas mixed with the reformed exhaust gas to a temperature needed for the reduction by use of the oxygen burner. Specially, in the case of the apparatus 100 for manufacturing molten iron, since the temperature of the exhaust gas passed through the multi-stage fluidized-bed reactor unit 20, that is, the temperature of the exhaust gas finally passed through the first preheating reactor 24 is relatively low, an amount of consumed water during the time of cooling the exhaust gas by using the dust collector 51 using water is small. Therefore, the manufacturing cost is saved.

Further, in the case of the dust and the tar existing on the upper side of the melter-gasifier 10, since the reducing coal gas is circulated as a reformed exhaust gas after flowing through the multi-stage fluidized-bed reactor unit 20, a path for circulating the dust and the tar with the reducing coal gas is sufficiently secured, thereby a considerable amount of the dust and the tar is removed. Therefore, it is possible to prevent the operation of the dust collector 51 using water from being disturbed due to the condensation of the tar on the dust collector 51 using water. Further, in case that the small-sized tar remover 75 is mounted on the front end of the compressor 76, it is also possible to prevent the compressor 76 and the gas reformer 77 from being damaged due to the condensation of the tar.

In the exhaust gas passed through the dust collector 51 using water, the exhaust gas is comprised of CO of 35 volume%, H₂ of 20 volume%, and CO₂ of 40 volume%. Therefore, it is preferable to remove CO₂ using the gas reformer 77 in order to increase the reduction ratio. The amount of divided exhaust gas is adjusted to 60 volume% or less of a total amount of the exhaust gas which is exhausted from the fluidized-red reactor unit 20. Therefore, even though the amount of reducing coal gas to be supplied to the multi-stage fluidized-bed reactor 20 is insufficient, it is possible to supplement the insufficient amount of the reducing coal gas. When the amount of divided exhaust gas is larger than 60 volume%, the amount of reformed exhaust gas to be supplied to the multi-stage fluidized-bed reactor unit 20 after being mixed with the reducing coal gas increases, whereby a gas flow rate in the multi-stage fluidized-bed reactor unit 20 becomes fast. As a result, a large amount of the iron-containing mixture scatters to the outside the multi-stage fluidized-bed reactor unit 20 and is lost.

Further, the amount of reducing gas to be supplied to the multi-stage fluidized-bed reactor unit 20 is adjusted within a range of 1050 to 1400 Nm³ with respect to 1 ton of the fine iron-containing ores to be charged into the multi-stage fluidized-bed reactor unit 20, thereby effectively reducing the fine iron-containing ores supplied to the multi-stage fluidized-bed reactor unit 20. Specifically, when the amount of reducing gas supplied to the multi-stage fluidized-bed reactor unit 20 is less than 1050 Nm³, it is difficult to obtain a desired reduction ratio. When the amount of reducing gas supplied to the multi-stage fluidized-bed reactor unit 20 is larger than 1400 Nm³; the ore is reduced and sticks to each other due to an oversupply of the reducing gas. Therefore, it is difficult to create a fluidized reduction condition.

In case that CO₂ is removed using the gas reformer 77, it is preferable that an amount of the CO₂ contained in the reformed exhaust gas passed through the gas reformer 77 is 3.0 volume% or less. When the amount of CO₂ is exceeds 3.0 volume%, the reducing power of the reformed exhaust gas decreases and the reformed exhaust becomes not suitable to use.

As shown in Fig. 1, in the apparatus 100 for manufacturing molten iron according to the embodiment of the present invention, part of the exhaust gas flow passed through the dust remover 51 using water is divided and is passed through the tar remover 75. The exhaust gas is compressed by the compressor 76 and is reformed through the gas reformer 77. Then, the reformed exhaust gas can be used as a carrier gas for charging the dust separated in the cyclone 14 into the melter-gasifier 10 after a valve V771 mounted on a carrier gas tube L52 is.opened. In case that the reformed exhaust gas is used as the carrier gas, an amount of nitrogen which is used as the carrier gas can be reduced and a combustion rate can be increased.

By opening a valve V773 mounted on a reducing gas re-supply tube L53, the divided reformed exhaust gas flow from which CO₂ is removed can be supplied to the melter-gasifier 10 during the time of supplying oxygen thereto. Therefore, an amount of the used briquettes can be reduced by supplying the reformed exhaust gas to the melter-gasifier 10 and a gas flow distribution inside a char bed can be improved.

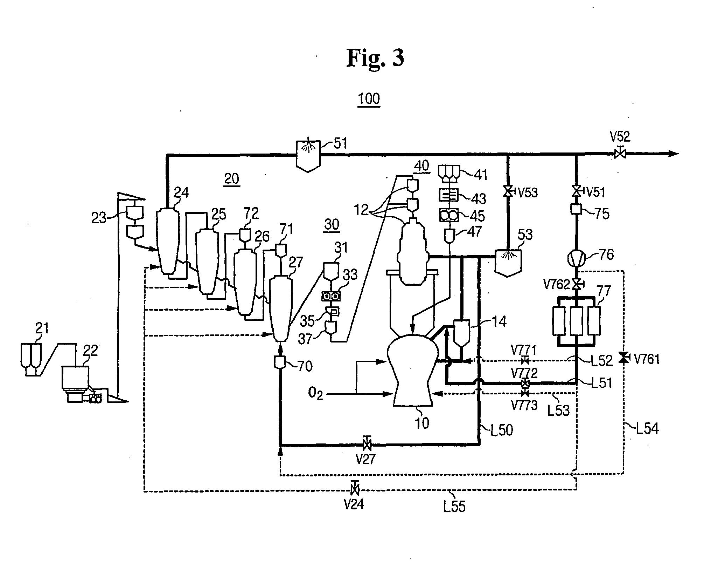

Fig. 3 is a schematic diagram illustrating a circulation process of circulating reducing coal gas in the apparatus 100 for manufacturing molten iron according to the embodiment of the present invention. In Fig. 3, bold solid lines represent circulation tubes through which the reducing coal gas is circulated. The other tubes irrelative to the circulation tubes are represented as dotted lines. In case of a closed valve, when the reducing coal gas is circulated, the reducing coal gas is actually filled to a front end of the valve. Therefore, it needs to be indicated in the figure, but it is omitted for the purpose of convenience in Fig. 3.

As shown in Fig. 3, the exhaust gas which is compressed and reformed can be controlled by using valves mounted on tubes. Specifically, when the amount of the reducing coal gas needed for reduction in the multi-stage fluidized-bed reactor unit 20 is insufficient, in the apparatus 100 for manufacturing molten iron according to the embodiment of the present invention, valves V51 to V53, V27, V762, and V772 are opened, and the others closed, thereby supplementing the multi-stage fluidized-bed reactor unit 20 with the reducing coal gas. The method of supplementing the reducing gas shown in Fig. 3 is for illustrative purpose only and is not meant to restrict the present invention.

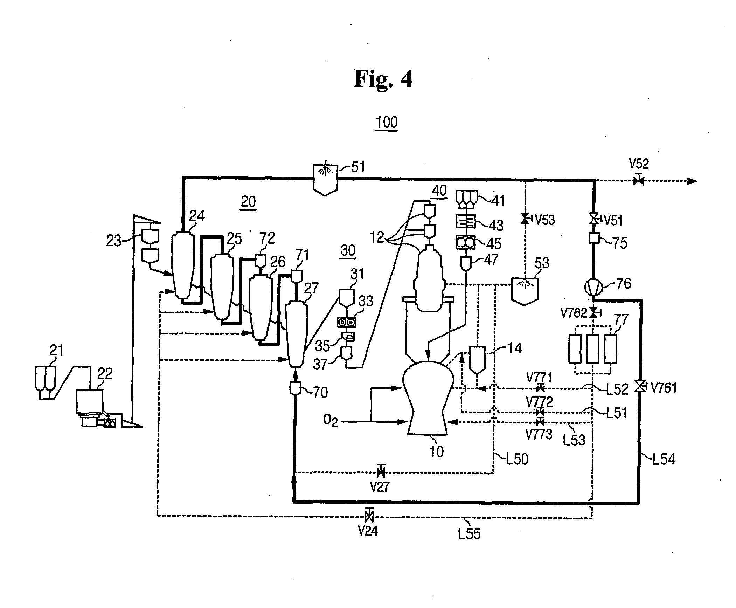

Fig. 4 is a schematic diagram illustrating a circulation process of circulating reducing coal gas after closing the supply of the reducing coal gas from the melter-gasifier 10 to the multi-stage fluidized-bed reactor unit 20, in the apparatus 100 for manufacturing molten iron according to the embodiment of the present invention. Bold solid lines represent circulation tubes through which the reducing coal gas is circulated. The other tubes irrelative to the circulation tubes are represented as dotted lines. In case of a closed valve, when the reducing coal gas is circulated, the reducing coal gas is actually filled to a front end of the valve. Therefore, it needs to be indicated in the figure, but it is omitted for the purpose of convenience in Fig. 4.

This process is related to the case in which the melter-gasifier 10 is tripped and it is impossible to supply the reducing gas to the multi-stage fluidized reactor unit 20. In this case, the whole amount of exhaust gas which is exhausted from the multi-stage fluidized-bed reactor unit 20 is bypassed through a exhaust-gas-bypass circulation tube L54 and is supplied to the multi-stage fluidized-bed reactor unit 20.

Further, in the melter-gasifier 10, the trip is occasionally generated due to trial trouble. In this case, since gas is not generated in the melter-gasifier 10, it is needed to circulate the exhaust gas to maintain bobble fluidized-bed in the multi-stage fluidized-bed reactor unit 20 connected to the melter-gasifier 10. In this case, the charging of the briquettes, the lump coals and the briquettes is stopped and the exhaustion of the reducing gas from the melter-gasifier 10 is stopped to close the melter-gasifier 10. Then, the valve V762 is closed. The whole exhaust gas exhausted from the multi-stage fluidized-bed reactor unit 20 is passed through the valve V51 and is compressed by the compressor 76. At the same time, the valve V761 mounted on the exhaust-gas-bypass circulation tube L54 is opened and the exhaust gas is supplied to the multi-stage fluidized-bed reactor unit 20. In this way, the exhaust gas is continuously circulated. The valves V27, V53, V771, V772, and V773 are all closed in this process to prevent the exhaust gas from leaking toward the melter-gasifier 10. Therefore, it is possible to continuously circulate the exhaust gas while preventing the exhaust gas from leaking inside the melter-gasifier 10. As a result, it is possible to prevent the collapse of the bubble fluidized-bed.

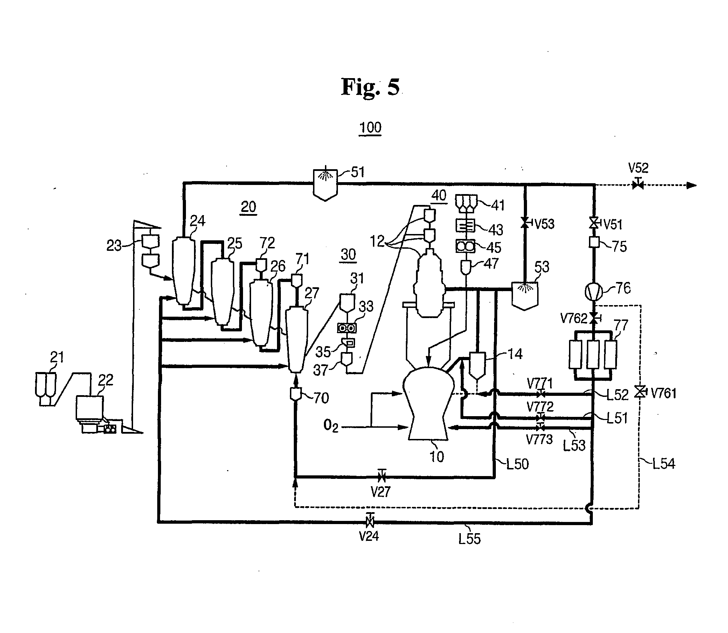

Fig. 5 is a schematic diagram illustrating a purge process of purging the apparatus 100 for manufacturing molten iron according to the embodiment of the present invention. Pipes, through which part of the compressed and reformed exhaust gas is circulated to purge the multi-stage fluidized-bed reactor unit 20, are represented as bold solid lines. In case of a closed valve, when the reducing coal gas is circulated, the reducing coal gas is actually filled to a front end of the valve. Therefore, it needs to be indicated in the figure, but it is omitted for the purpose of convenience in Fig. 5.

When purge is needed during operation, the reformed exhaust gas for purging is supplied to the multi-stage fluidized-bed reactor unit 20 via a purging-coal-gas supply tube L55. Since a general operation is continuously performed while such a purge is performed, part of the reformed exhaust gas is mixed with exhaust gas from the melter-gasifier 10 via the reformed-exhaust-gas supply tube L51 and is supplied to the multi-stage fluidized-bed reactor unit 20, and part of the reformed exhaust gas is supplied to the tuyere of the melter-gasifier 10 or a dust burner via carrier gas tube L52 and the reducing gas re-supply tube L53 in the same way as during ordinary operation. Such a reformed exhaust gas flow is represented by bold solid lines.

The multi-stage fluidized-bed reactor unit 20 comprises inner devices such as a cyclone, a standpipe, a riser pipe, and a dumping line, which are built therein. It is necessary to maintain a fluidized state in the inner devices such that the reducing coal gas and the iron-containing mixture can be continuously fluidized. Therefore, it is necessary to provide a purge line to prevent the inner device from being blocked. The purge is generally performed by using nitrogen gas. However, when the reducing coal gas is used for purge, additional nitrogen gas is not needed, thereby considerably reducing the amount of nitrogen consumed.

In case that the purge is performed by using nitrogen gas, since the exhaust gas flow which is exhausted from the multi-stage fluidized-bed reactor unit 20 is divided and reformed and then is again circulated into the multi-stage fluidized-bed reactor unit 20, nitrogen is accumulated in the reformed exhaust gas and nitrogen concentration in the whole reducing coal gas supplied to the multi-stage fluidized-bed reactor unit is ultimately increased. As a result, when the concentration of nitrogen, which is inactive gas, exceeds 10.0 volume% of the whole reducing coal gas, the reduction ratio of the ore at the multi-stage fluidized-bed reactor unit 20 decreases. Therefore, as described above, nitrogen concentration in the reducing coal gas is reduced to 10.0 volume% or less-by using the reformed exhaust gas as the purge gas. Thus, it is possible to prevent nitrogen from being accumulated in the reducing coal gas to be supplied to the multi-stage fluidized-bed reactor unit 20.

The exhaust gas flow which is exhausted through the multi-stage fluidized-bed reactor unit 20 is divided and CO₂ is removed from the exhaust gas. The reformed exhaust gas is supplied to each of the fluidized-bed reactors 20. Although it is not shown in Fig. 5, the coal gas supply tube L55, which is connected to each of the fluidized-bed reactors 20, is again divided to supply the reformed exhaust gas to the inner devices of the respective fluidized-bed reactors 20 and can purge the inner devices, as needed. Specifically, the amount of the reformed exhaust gas, which is supplied as purge gas, can be controlled by using a valve V24 mounted on the purging-coal-gas supply tube L55.

Hereinafter, an operating condition of the multi-stage fluidized-bed reactor unit 20 in a method of manufacturing molten iron according to the present invention will be described in detail. Specifically, in the present invention, an optimal control condition is determined taking into account the fact that it is significantly important to reduce the iron-containing mixture using the reducing coal gas.

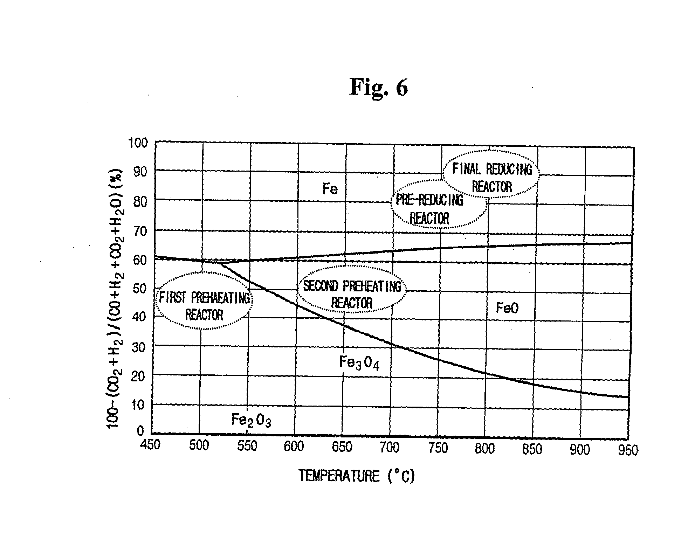

Fig. 6 is a graph illustrating relationship between a degree of oxidation and Fe mixture depending on temperatures of the multi-stage fluidized-bed reactor unit 20 in the apparatus for manufacturing molten iron according to the embodiment of the present invention, in which stable regions of Fe mixture phase in each of the fluidized-bed reactors are illustrated.

Here, a degree of oxidation is calculated by using each amount of gas such as CO, CO₂, H₂, and H₂O contain in the reducing gas. The degree of oxidation means a measure of reducing power. The degree of oxidation is defined as (CO₂ volume% + H₂O volume%)/(CO volume% + H₂ volume% + CO₂ volume% + H₂O volume%) x 100. In Fig. 6, 100 - the degree of oxidation is used as value for a Y-axis for the purpose of convenience, which means a degree of reduction as a concept contrary to the degree of oxidation. Therefore, as it goes toward the upper side of the Y-axis, a reduction reaction is easily generated. On the contrary, as it goes toward the lower side of the Y-axis, an oxidation reaction is easily generated.

In the method of manufacturing molten iron according to an embodiment of the present invention, the multi-stage fluidized-bed reactor unit 20 (shown in Fig. 1) uses directly the coal gas as reducing gas. Therefore, it is possible to operate under relatively low gas basic unit of 1400 Nm³/ton and relatively short resident time of maximum sixty minutes with respect to each of the fluidized reactors, compared to other fluidized-bed reducing process such as FINMET, FIOR, IRON CARBIDE, etc., which uses directly natural gas. Therefore, in the fluidized reduction process, as shown in Fig. 6, in case of a first preheating reactor in which a first step for preheating the iron-containing mixture is performed, it is preferable that the fluidized reduction occurs at a Fe₃O₄ phase stable region. In case of a second preheating reactor in which a second step for re-preheating the iron-containing mixture is performed, it is preferable that the fluidized reduction occurs at a FeO phase stable region. In case of a pre-reducing reactor in which a third step for pre-reducing the preheated iron-containing mixture is performed and a final reactor in which a fourth step for finally reducing the pre-reduced iron-containing mixture are performed, it is preferable that the fluidized reduction occurs at a Fe phase stable region. By maintaining the above-described regions, it is possible to minimize the amount of the iron-containing mixture stabilized into the Fe₃O₄ phase in which reaction speed is very slow, while passing through the first preheating reactor and the second preheating reactor. Further, it is possible to make the iron-containing mixture be sufficiently reduced while passing through the pre-reducing reactor and the final reactor in which the Fe phase stabilized region is formed.

In the multi-stage fluidized-bed reactor unit 20 in which the operation is performed at the relatively low gas basic unit, it is important to adjust the temperature of the respective fluidized reactors and the composition of the reducing coal gas for securing the Fe phase stabilized region in each fluidized-bed reactor.

To create the fluidized reduction condition in each of the fluidized-bed reactors, it is preferable that the temperature of the bubble fluidized-bed of the first preheating reactor is maintained in a range of 400 to 500°C, the temperature of the bubble fluidized-bed of the second preheating reactor is maintained in a range of 600 to 700°C, the temperature of the bubble fluidized-bed of the pre-reducing reactor is maintained in a range of 700 to 800°C, and the temperature of the bubble fluidized-bed of the final reducing reactor is maintained in a range of 770 to 850°C. Further, it is preferable that the composition of the reducing coal gas supplied to each of the fluidized-bed reactor is maintained to secure a certain degree of oxidation in each of the fluidized-bed reactors, specifically, 45% or more in the first preheating reactor, 35% to 50% in the second preheating reactor, and 25% or less in the pre-reducing reactor and the final reducing reactor.

Concerning the suitable temperature and the composition of the reducing coal gas in each of the reactors for maintaining above-mentioned condition, the temperature of the reducing coal gas which is exhausted from the melter-gasifier and which is supplied to the bubble fluidized-bed of the final reactor is too high, that is, the temperature is about 1000°C. Therefore, when the reducing coal gas is supplied to the final reactor as it is, the iron-containing mixture in the final reactor is overheated and sticking is generated between ores. Therefore, it is necessary to cool down the reducing coal gas supplied to the final reactor. The cooling of the final reactor is made possible by mixing the room-temperature reformed exhaust gas and the reducing coal gas exhausted from the melter-gasifier. Further, the supplied amount of room-temperature reformed exhaust gas is adjusted depending on the amount of the reducing gas required by the final reactor. As a result, the reducing coal gas supplied to the final reactor during mixing process may be overcooled below a suitable temperature. Therefore, the temperature of the reducing coal gas is maintained to be a suitable temperature by supplying oxygen to the reducing coal gas and by partially combusting the reducing coal gas, after mixing the room-temperature reformed exhaust gas with the reducing coal gas.

Further, a burner 72 is mounted between the second preheating reactor 25 and the pre-reducing reactor 26 and a burner 71 is mounted between the pre-reducing reactor 26 and the final reactor 27 for supplying oxygen to the reducing coal gas which is exhausted from reactors 20 and for partially combusting the reducing coal gas. Through this method, the degree of oxidation of the reducing coal gas in the bubble fluidized-bed of the pre-reducing reactor 26 is maintained at 35% or less. Further, the degree of oxidation of the reducing coal gas in the bubble fluidized-bed of the second preheating reactor 26 is maintained within a range of 40% to 60%. Further, the reducing coal gas which is exhausted from the second preheating reactor 25 is supplied to the bubble fluidized-bed of the first preheating reactor 24 as it is. As a result, the degree of oxidation of the multi-stage fluidized-bed reactor unit 20 is adjusted.

Therefore, according to the present invention, when the amount of the reducing coal gas is insufficient in the above-mentioned actual process, it is possible to supplement the insufficient amount and to meet the ideal operation condition of the multi-stage fluidized-bed reactor unit 20.

In table 1, a temperature of fluidized-bed and a degree of oxidation of the reducing gas for each of reactors in a four-stage fluidized-bed reactor unit 20, and Fe-O phase contained in ore discharged from each of fluidized-bed reactors in each stage are shown.

**[Table 1]**

| | First preheating reactor | Second preheating reactor | Pre-reducing reactor | Final reducing reactor |
|---|---|---|---|---|
| Temperature | 460°C | 650°C | 800°C | 840°C |
| Degree of oxidation | 50.0% | 40.0% | 24.0% | 10.5% |
| Fe₂O₃ | 62.0wt% | 48.3wt% | - | - |
| Fe₃O₄ | 13.2 wt% | 12.0 wt% | - | - |
| FeO | - | 29.7 wt% | 60.3 wt% | 19.4 wt% |
| Fe | - | - | 15.6 wt% | 54.1 wt% |
| Reduction ratio | 2.0% | 20.0% | 50.0% | 85.1% |

In table 1, a gas basic unit is 1200 Nm³/t-ore. As shown in table 1, by controlling the temperature of the fluidized-bed and the degree of oxidation for each of the fluidized-bed reactors in the multi-stage fluidized-bed reactor unit 20 within the above-described range, the amount of Fe₃O₄ formed in the first preheating reactor is minimized and the Fe₃O₄ is not further formed in the second preheating reactor. As a result, a reduction ratio of 80% or more with respect to fine iron-containing ores can be obtained in the final reactor by reducing the FeO into Fe.

In the above-mentioned apparatus 100 for manufacturing molten iron, fine or lump coals and fine iron-containing ores can be directly used and the apparatus 100 is compact on the whole, such that it is suitable to use the apparatus 100 in an integrated steel mill by connecting the apparatus 100 to the integrated steel mill. Therefore, it is possible to directly manufacture a hot-rolled steel plate from the fine or lump coals and fine iron-containing ores by employing the apparatus 100 for manufacturing molten iron according to the embodiment of the present invention in a mini-mill process, which is an integrated steel manufacturing process.

Hereinafter, an integrated steel mill employing the apparatus 100 for manufacturing molten iron according to the embodiment of the present invention will be described in detail. Such an integrated steel mill is for illustrative purpose only and is not meant to restrict the present invention.

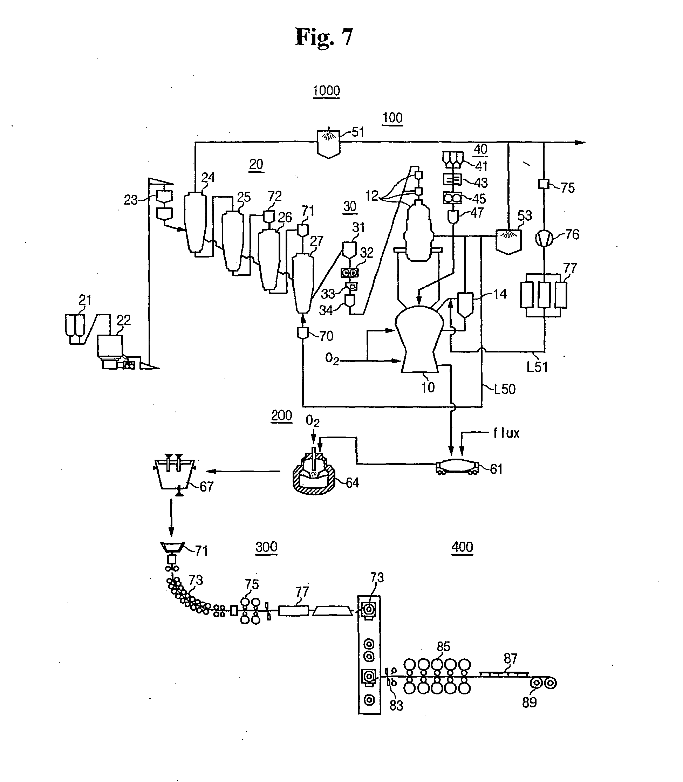

Fig. 7 is a view illustrating an embodiment of an integrated steel mill 1000 employing the apparatus 100 for manufacturing molten iron according to the embodiment of the present invention. In Fig. 7, the integrated steel mill 1000 for directly manufacturing a hot-rolled steel plate from fine or lump core and fine iron-containing ores is schematically illustrated. The apparatus 100 for manufacturing molten iron shown in Fig. 7 has the same structure as the above-mentioned apparatus 100 for manufacturing molten iron according to the embodiment of the present invention, therefore the description thereof is omitted for the purpose of convenience. Hereinafter, the other apparatus except the apparatus 100 for manufacturing molten iron will be described.

The integrated still mill shown in Fig. 7 comprises the apparatus 100 for manufacturing molten iron, an apparatus for manufacturing steel 200 which is connected to the apparatus 100 for manufacturing molten steel and which manufactures molten steel by removing impurities and carbon from the molten iron, a thin slab casting machine 300 which is connected to the apparatus 200 for manufacturing steel and which continuously casts the molten steel supplied from the apparatus into thin slab, a hot-rolling machine 400 which is connected to the thin slab casting machine 300 and which manufactures hot-rolled plate by hot-rolling the thin slab discharged from the thin slab casting machine 300. In addition, the integrated steel mill 1000 may comprise further apparatus as needed.

Fig. 7 illustrates in detail an example of process of manufacturing steel by employing the above-mentioned apparatuses. The apparatus 200 for manufacturing steel comprises a molten-iron pre-treating apparatus 61 which removes phosphorus and sulfur contained in the molten iron, a decarbonization apparatus 64 which is connected to the molten iron pre-treating apparatus 61 and which removes carbon and impurities contained in the molten iron discharged from the molten iron pretreatment apparatus 61, and a ladle 67 which is connected to the decarbonization apparatus 64 and which manufactures molten steel by refining again the molten iron discharged from the decarbonization apparatus 64.

The molten iron discharged from the melter-gasifier 10 is periodically discharged to the molten iron pretreatment apparatus 61 having a refractory container and is transported to a downstream process. A molten-iron pre-treatment is performed during the transportation by blowing desulfurizing agent, which is flux, in the molten iron contained in the molten iron pretreatment apparatus 61 and by removing sulfur and phosphorus components contained in the molten iron. As a result, sulfur component in the molten iron is adjusted to 0.006% or less. It is preferable that CaO or CaCO₃ is used as the desulfurizing agent in the molten iron pretreatment process.

Further, the molten iron in the molten .iron pretreatment apparatus, which went through the molten iron pretreatment, is discharged into a decarbonization apparatus 64 in a converter type. In the process of discharging, it is preferable that molten slag, which is generated in the molten iron pretreatment process and is floated on the molten iron, does not infiltrate into the decarbonization apparatus 64. An oxidation refining is performed by blowing oxygen at a high speed into the molten iron after the molten iron is supplied to the decarbonization apparatus 64. During the oxidation refining, impurities which are dissolved in the molten iron such as carbon, silicon, phosphorus, and manganese are removed by oxidation and the molten iron is converted to molten steel. The oxidized impurities are dissolved into the molten slag on the molten steel by CaO, CaF₂, dolomite, etc. which are supplied to the converter and are separated from the molten steel. After the oxidation refining is finished, the molten steel is discharged from the decarbonization apparatus 64 into the ladle 67, which is a refractory container and then is transported to a downstream process. Through such a process of manufacturing steel, an amount of carbon contained in the molten steel is adjusted to 2.0 wt% or less.

The molten steel goes through a second refining process in the ladle 67. The molten steel is heated by an electrical arc, which is generated on the molten steel by a high voltage transferred through an electrode rod, and is agitated by inactive gas blown from the bottom of the ladle 67, such that a uniform distribution of temperature and component and a floatation separation of nonmetallic interposed materials inside the molten steel is achieved. Further, a sulfur component, which is existed in the molten steel in a small amount, can be vigorously removed by blowing Ca-Si powers into the molten steel, as needed. Further, after the above-mentioned processes are finished, the molten iron goes through a gas removing process in which a vacuum bath is connected to the upper side of the refractory container to generate a vacuum state and gas components such as carbon, N₂, and H₂ are removed, thereby increasing a degree of purity of the molten steel. It is preferable to prevent the temperature of the molten steel from being lowered by using combustion heat generated by blowing oxygen during the gas removing process and by combusting the exhausted gas component.

The ladle 67 is transported to the thin slab casting machine 300 after the above-mentioned second refining process. The molten steel is discharged from the ladle 67 to tundish 71, which is located above the thin slab casting machine 300, and is supplied to the thin slab casting machine 73 from the tundish 71 to cast a thin slab having a thickness of 40 mm to 100 mm. The cast thin slab is compressed through a rough rolling mill 75, which is directly connected to the casting machine 73, into a bar shape having a thickness of 20 to 30 mm. Then, the compressed thin slab is heated by the heater 77 and is wound on a winder 79. When the thickness of the thin slab is smaller than 40 mm, it is easily broken. When the thickness of the thin slab is larger than 100 mm, it may overload the tough rolling mill 75.

The wound bar is again unwound and is passed through a rust remover 83 to remove rust generated on a surface of the bar. Then, the bar is transported to a final rolling mill and is rolled into a rolled steel plate having a thickness of 0.8 to 2.0 mm. The rolled steel plate is cooled by cooler 87 and is wound 89 as a finally rolled steel plate. Hot-rolled steel plate having a thickness of 0.8 to 2.0 mm is suitable for a consumer to use.

In the integrated steel mill 1000 employing the apparatus 100 for manufacturing molten iron according to the embodiment of the present invention, there is an advantage that a hot-rolled steel plate can be manufactured directly using fine or lump coals and fine iron-containing ores through above-described processes. Therefore, raw material is not restricted at the time of manufacturing molten iron and it is possible to manufacture a hot-rolled steel plate by using compact facilities.

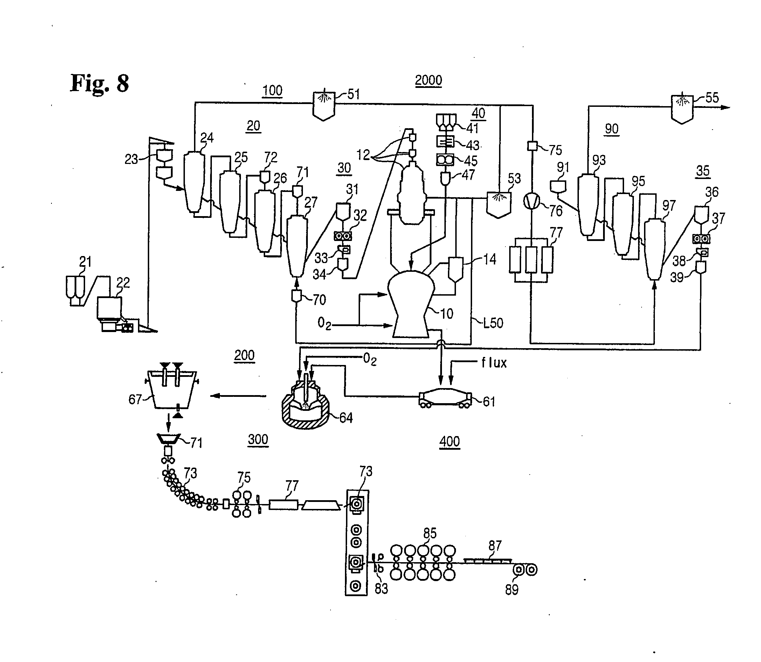

Fig. 8 is a view illustrating another embodiment of the integrated steel mill 2000 employing the apparatus 100 for manufacturing molten iron according to the embodiment of the present invention. Fig. 8 illustrates a process of supplying reduced iron to decarbonization apparatus which is one element of an apparatus for manufacturing steel by a second multi-stage fluidized-bed reactor unit 90 and a second briquette-manufacturing apparatus 35 equipped to the integrated steel mill 2000. The integrated steel mill 2000 shown in Fig. 8 has the same structure as the integrated steel mill 1000 except for some part. Therefore, description of the same part is omitted for the purpose of convenience and thus description of the other portion will be described in detail.

Further, in the integrated steel mill 2000 to be described, the above-described multi-stage fluidized-bed reactor unit 20 connected to the melter-gasifier 10 is referred to as a first fluidized-bed reactor unit and another multi-stage fluidized-bed reactor unit is referred to as a second multi-stage fluidized-bed reactor unit. Further, the briquette-manufacturing apparatus 30, which is connected to the rear end of the first multi-stage fluidized-bed reactor unit 20, is referred to as a first briquette-manufacturing apparatus and another briquette-manufacturing apparatus 35 which is connected to a rear end of second fluidized-bed reactor unit 90 is referred to as a second briquette-manufacturing apparatus.

As shown in Fig. 8, the integrated steel mill 2000 comprises second multi-stage fluidized-bed reactor unit 90 and the second briquette-manufacturing apparatus 35. The second multi-stage fluidized-bed reactor unit 90 is an equipment for reducing fine iron-containing ores, which are supplied thereto from an iron-containing ore hopper 91. The multi-stage fluidized-bed reactor unit 90 is made of a three-stage fluidized-bed reactor unit comprising a first preheating reactor 93, a pre-reducing reactor 95 and a final reducing reactor 97. In each of the reactors 93, 95, and 97, a bubble fluidized-bed is formed.

In the second multi-stage fluidized-bed reactor unit 90, the first preheating reactor 93 preheats the fine iron-containing ores at a temperature of 600 to 700°C, the pre-reducing reactor 95 connected to the preheating reactor 93 pre-reduces the preheated iron-containing ores at a temperature of 700 to 800°C, and the final reactor 97 connected to the pre-reducing reactor 95 finally reduces the pre-reduced iron-containing ores at a temperature of 770 to 850°C.

The second multi-stage fluidized-bed reactor unit 90 is supplied with part of exhaust gas exhausted from the first fluidized reactor unit 20 via an additional reducing gas circulation pipe from the final reactor 97 and converts dried and mixed iron-containing ores having a grain size of 8 mm or less to reduced iron which is reduced over 92% while sequentially circulating the exhaust gas through each of the reactors 93, 95, and 97. In Fig. 8, the second multi-stage fluidized-bed reactor unit 90 is represented as a three-stage fluidized-bed reactor unit, but is for illustrative purpose only and is not meant to restrict the present invention. The fluidized-bed reactor unit 90 can be implemented to have various number of stage

Further, the second briquette-manufacturing apparatus 35 temporary stores the high-temperature reduced iron at a charging hopper 36 and briquettes the reduced iron by pressure-forming while passing the reduced iron through a pair of roller 37. Then, the briquette is crushed by a crusher 38 and stored at an briquette supplying hopper 39.

It is preferable that the amount of the reducing coal gas supplied to the second multi-stage fluidized-bed reactor unit 90 is 40 volume% or more of the total amount of exhaust gas exhausted from the first multi-stage fluidized-bed reactor unit 20. On the other hand, in the process of supplying part of exhaust gas exhausted from the first, multi-stage fluidized-bed reactor 20 to the second multi-stage fluidized-bed reactor unit 90, tar is removed from the exhaust gas by a tar remover 75. It is preferable that an amount of CO₂ contained in the reformed exhaust gas is 3.0 volume% or less. The reducing coal gas passed through the second multi-stage fluidized-bed reactor unit 90 is dusted and cooled by a dust collector 55 using water, and then discharged outside.

Although not shown in Fig. 8, it is preferable that the reformed exhaust gas is partially combusted by supplying oxygen thereto to raise a temperature of the exhaust gas by use of combustion heat and the raised temperature is 800 to 850°C.

Since the reduced iron is manufactured by using the iron-containing ores and the purified reducing gas, 90% or more of the reduced iron is comprised of pure iron, and sulfur is contained in a very low concentration, whereby increasing a degree of purity of the molten steel which is manufactured at the decarbonization apparatus 64 when the reduced iron is charged into the decarbonization apparatus 64.

Hereinafter, the present invention will be described in detail with reference an experimental example. However, this experimental example is for illustrative purpose only and is not meant to restrict the present invention.

### [Experimental Example]

Molten and slag is manufactured by the above-mentioned apparatus for manufacturing molten iron according to the embodiment of the present invention.

In the experimental example according to the embodiment of the present invention, the melter-gasifier 10. was maintained at 3.2 atmospheres and an amount of oxygen supplied to combust coal inside the melter-gasifier 10 was adjusted to 550 Nm³ per 1 ton of molten iron. Further, amounts of fine ore and supplementary raw materials were adjusted to 1.5 tons and 0.35 tons, respectively. An amount of coal supplied to the melter-gasifier 20 was adjusted to 0.9 to 1.0 tons based on produced molten iron of 1 ton. A production capacity of the apparatus for manufacturing molten iron was determined to be 85 tons/hour under the above-described operational condition.

An experimental operation was performed according to the embodiment of the present invention and compositions of resultant molten iron and slag discharged from the melter-gasifier were as follows. Table 2 shows a composition of molten iron according to the embodiment of the present invention and Table 3 shows a composition of slag according to the embodiment of the present invention.

**[Table 2]**

| Temperature | [C] | [Si] | [Mn] | [P] | [S] |
|---|---|---|---|---|---|
| 1500°C | 4.5 wt% | 0.5 wt% | 0.17 wt% | 0.09 wt% | 0.04 wt% |

As shown in Table 2, the temperature of the molten iron manufactured by the experimental example according to the present invention was about 1500°C and the amount of impurities in the molten iron except for the iron was as described above.

**[Table 3]**

| Temperature | [SiO₂] | [CaO] | [MgO] | [Al₂O₃] | Basicity (CaO)/(SiO₂) |
|---|---|---|---|---|---|
| 1520°C | 31.1 wt% | 35.7 wt% | 12.5 wt% | 13.5 wt% | 1.15 |

As shown in Table 3, the temperature of the molten iron manufactured by the experimental example according to the present invention was about 1520°C and the basicity was 1.15.

As can be understood from the Table 2, the temperature of the molten iron manufactured according to the present invention was properly 1500°C and the amounts of Si, P, and S were so small that it could satisfy the molten iron quality standard for general steel manufacture. Further, as can be understood from the Table 3, the temperature of the slag was properly 1520°C and the basicity of the slag, which is a measure of slag quality, was properly 1.15. Therefore, in the method of manufacturing molten iron according to the embodiment of the present invention, even though the fine or lump coals and the fine iron-containing ores were used differently from the conventional invention, the quality of the molten was similar to that of the molten iron in the conventional method.

According to the present invention described above, since molten iron having high quality satisfying the molten iron quality standard for manufacturing steel can be continuously manufactured by directly using fine or lump coals or fine iron-containing ores, it is possible to replace a blast furnace method which has been in use in an integrated steel mill. Therefore, it is possible to use low-price raw materials and to omit sintering and coke processes, thereby increasing economical efficiency of the integrated steel mill and preventing the generation of pollution materials during the sintering and coke processes.

Further, in the apparatus for manufacturing molten iron according to the present invention, exhaust gas flow, which is exhausted from a multi-stage fluidized-bed reactor unit, is divided and is reformed. The reformed exhaust gas is supplied to the multi-stage fluidized-bed reactor unit. Therefore, it is possible to supplement an insufficient amount of reducing coal gas, thereby securing operational flexibility.

Furthermore, room-temperature-reformed exhaust gas which is cooled can be supplied to a front end of a cyclone, thereby preventing the cyclone from being overheated.

According to the present invention, the exhaust gas, which is exhausted from the multi-stage fluidized-bed reactor unit, is used as carrier gas, thereby reducing an amount of nitrogen used as the carrier gas.

Further, the reformed exhaust gas which is reformed according to the present invention can be again supplied to a melter-gasifier together with oxygen, thereby reducing a coal consumption ratio and improving gas stream distribution in a char-bed.

While the present invention has been particularly shown and described with reference to exemplary embodiments thereof, it will be understood by those skilled in the art that various changes in form and details may be made therein without departing from the scope of the invention as defined by the appended claims.

## Claims

1. A method of manufacturing molten iron, comprising the steps of:
manufacturing iron-containing mixture by mixing fine iron-containing ores and
supplementary raw materials and by drying the resultant mixture;
converting the iron-containing mixture to a reduced material by reducing
and sintering while passing the iron-containing mixture through a multi-stage fluidized-bed reactor unit, of which fluidized-bed reactors are sequentially connected to each other;
manufacturing briquettes by briquetting the reduced material at high temperature;
forming a coal packed bed by charging lump coals and briquettes which are made by briquetting fine coals, into a melter-gasifier as heat sources for melting the briquettes;
manufacturing molten iron by charging the briquettes into the melter-gasifier connected to the multi-stage fluidized-bed reactor unit and by supplying oxygen into the melter-gasifier;
supplying reducing coal-gas exhausted from the melter-gasifier into the multi-stage fluidized-bed reactor unit;
dividing the exhaust gas flow which is exhausted through the multi-stage fluidized-bed reactor unit and removing CO₂ from the exhaust gas;
mixing the reformed exhaust gas from which CO₂ is removed with the reducing coal gas which is exhausted from the melter-gasifier; and
heating the reducing coal gas mixed with the reformed exhaust gas before
supplying it to the multi-stage fluidized-bed reactor unit to adjust a temperature of the reducing coal gas to a temperature required to reduce the iron-containing mixture at the multi-stage fluidized-bed reactor unit.

2. The method of claim 1, wherein the reformed exhaust gas is heated by using an oxygen burner, at the heating step before supplying the reducing coal gas mixed with the reformed exhaust gas to the multi-stage fluidized-bed reactor unit.

3. The method of claim1, wherein, in the step of dividing the exhaust gas flow which is exhausted through the multi-stage fluidized-bed reactor unit and removing CO₂ from the exhaust gas, an amount of divided exhaust gas is preferably 60 volume% of a total amount of the exhaust gas which is exhausted from the fluidized-bed reactors.

4. The method of claim 1, wherein the amount of the reformed exhaust gas is maintained at a range of 1050 Nm³ to 1400 Nm³ per 1 ton of the fine iron-containing ores.

5. The method of claim 1, wherein, in the step of mixing the reformed exhaust gas from which CO₂ is removed with the reducing coal gas which is exhausted from the melter-gasifier, an amount of CO₂ contained in the reformed exhaust gas is preferably 3.0 volume% or less.

6. The method of claim 1, wherein the divided exhaust gas is compressed at the step of dividing the exhaust gas flow exhausted from the multi-stage fluidized-bed reactor unit and removing CO₂ from the exhaust gas.

7. The method of claim 1, further comprising a step of dividing the exhaust gas flow which is exhausted through the multi-stage fluidized-bed reactor unit and removing tar from the exhaust gas, before the step of dividing the exhaust gas flow which is exhausted from the multi-stage fluidized-bed reactor unit and removing CO₂ from the exhaust gas.

8. The method of claim 1, wherein, in the step of mixing the reformed exhaust gas from which CO₂ is removed with the reducing coal gas which is exhausted from the melter-gasifier, the reformed exhaust gas is mixed at a front end of a cyclone which charges dust exhausted from the melter-gasifier into the melter-gasifier.

9. The method of claim 8, wherein the reformed exhaust gas flow from which CO₂ is removed is divided and is used as carrier gas for charging dust separated at the cyclone into the melter-gasifier.

10. The method of claim 1, further comprising a step of bypassing a total amount of exhaust gas which is exhausted from the multi-stage fluidized-bed reactor unit and supplying it to the multi-stage fluidized-bed reactor unit during the time of closing the melter-gasifier or before operating the melter-gasifier.

11. The method of claim 1, further comprising the steps:
dividing the exhaust gas flow which is exhausted through the multi-stage fluidized-bed reactor unit and removing CO₂ from the exhaust gas flow; and
purging the multi-stage fluidized-bed reactor unit by dividing the reformed exhaust gas flow from which CO₂ is removed and by supplying the reformed exhaust gas to each of the fluidized-bed reactor.

12. The method of claim 11, wherein an amount of nitrogen contained in the reducing coal gas is 10.0 volume% or less.

13. The method of claim 1, further comprising the step of:
dividing the exhaust gas flow which is exhausted through the multi-stage fluidized-bed reactor unit and removing CO₂ contained in the exhaust gas flow, and dividing the reformed exhaust gas flow from which CO₂ is removed and
supplying it into the melter-gasifier together with oxygen during the time of supplying oxygen thereto.

14. The method of claim 1, wherein the step of converting the iron-containing mixture to a reduced material comprises:
a first step of preheating the iron-containing mixture at a temperature of 400 to 500°C;
a second step of re-preheating the preheated iron-containing mixture at a temperature of 600 to 700°C;
a third step of pre-reducing the re-preheated iron-containing mixture at a temperature of 700 to 800°C; and
a fourth step of finally reducing the pre-reduced iron-containing mixture at a temperature of 770 to 850°C.

15. The method of claim 14, wherein a degree of oxidation at the first and second steps is 25% or less;
a degree of oxidation at third step is 35 to 50%;
a degree of oxidation at fourth step is 45% or more,
here, the degree of oxidation is obtained by a following equation: (CO₂ volume% + H₂O volume%)/(CO volume% + H₂ volume% + CO₂ volume% + H₂O volume%) x 100; CO, CO₂, H₂O and H₂ are gases, each of which is contained in the reducing gas.

16. The method of claim 14, wherein the second and third steps comprise a step of supplying oxygen.

17. The method of claim 1, wherein, in the step of manufacturing the briquettes at a high temperature, the grain size of the briquettes are within a range of 3 mm to 30mm.

18. The method of claim 1, wherein, in the step of forming the coal packed bed, the grain size of the briquette is within a range of 30 mm to 50 mm.

19. An integrated steel manufacturing method, comprising the steps of:
manufacturing molten iron by using the molten iron manufacturing method according to claim 1;
manufacturing molten steel by removing impurities and carbon contained in the molten iron;
continuously casting the molten iron into thin slab;
hot-rolling the thin slab to make hot-rolled steel plate.

20. The integrated steel manufacturing method of claim 19, wherein, in the step of continuously casting the molten iron into a thin slab, the molten steel is continuously cast into thin slab having a thickness of 40 mm to 100 mm.

21. The integrated steel manufacturing method of claim 19, wherein, in the step of hot-rolling the thin slab to make hot-rolled steel plate, the hot-rolled steel plate is made to have a thickness of 0.8 mm to 2.0 mm.

22. The integrated steel manufacturing method of claim 19, wherein the step of manufacturing the molten steel comprises the steps of:
pre-treating the molten iron to remove phosphorus and sulfur contained in the molten iron;
removing carbon and impurities contained in the molten iron by supplying oxygen into the molten iron; and
manufacturing the molten steel by removing impurities and dissolved gas by way of second refining of the molten iron.

23. The integrated steel manufacturing method of claim 22, further comprising the steps of:
converting fine iron-containing ores to reduced iron by reducing the fine iron-containing ores while passing it through a multi-stage fluidized-bed reactor unit, of which reactors are sequentially connected to each other; and
manufacturing reduced-iron briquettes by briquetting the reduced iron at a high temperature,
wherein, in the step of removing carbon and impurities contained in the molten iron, the reduced-iron briquettes and the molten iron are mixed, and carbon and impurities are removed therefrom.

24. The integrated steel manufacturing method of claim 23, wherein the step of converting the fine iron-containing ores to the reduced iron comprises the steps of:
preheating the fine iron-containing ores at a temperature of 600 to 700°C;
pre-reducing the preheated fine iron-containing ores at a temperature of 700 to 800°C; and
final-reducing the pre-reduced fine iron-containing ores at a temperature of 770 to 850°C to convert it to reduced iron.

25. An apparatus for manufacturing molten iron, comprising:
a multi-stage fluidized-bed reactor unit for converting fine iron-containing ores which are mixed and dried, and supplementary raw materials to reduced material;
a briquette-manufacturing apparatus which is connected to the multi-stage fluidized-bed reactor unit and which manufactures briquettes by briquetting the reduced material at a high temperature;
a briquetter for manufacturing briquette, which is used as a heat source, by briquetting fine coals;
a melter-gasifier for manufacturing molten steel, into which lump coals and the briquettes manufactured from the briquetter are charged and a coal packed bed being formed, and into which the reduced material is charged from the briquette-manufacturing apparatus and
oxygen is supplied;
a reducing-coal-gas supply tube for supplying the reducing-coal-gas exhausted from the melter-gasifier to the multi-stage fluidized-bed reactor unit; and
a reformed-exhaust-gas supply tube which divides the exhaust gas flow which is exhausted from the multi-stage fluidized-bed reactor unit and supplies reformed exhaust gas from which CO₂ is removed,
wherein an oxygen burner is mounted on the reducing-coal-gas supply tube for heating the reducing coal gas mixed with the reformed exhaust gas, before supplying it to the multi-stage fluidized-bed reactor unit.

26. The apparatus for manufacturing molten iron of claim 25, wherein the reformed exhaust gas supply tube includes a gas reformer for removing CO₂ contained in the exhaust gas, which is exhausted through the multi-stage fluidized-bed reactor unit and is divided.

27. The apparatus for manufacturing molten iron of claim 25, wherein the reformed exhaust gas supply tube includes a tar remover for removing tar from the exhaust gas, which is exhausted through the multi-stage fluidized-bed reactor unit and is divided.

28. The apparatus for manufacturing molten iron of claim 27, wherein the reformed exhaust gas supply tube includes a compressor for compressing the exhaust gas, which is exhausted through the multi-stage fluidized-bed reactor unit and which is divided, and that the tar remover is mounted on a front end of the compressor.

29. The apparatus for manufacturing molten iron of claim 25, wherein a cyclone, which charges dust exhausted from the melter-gasifier to the melter-gasifier, is provided to the melter-gasifier, and the reformed-exhaust-gas supply tube is connected to a front end of the cyclone.

30. The apparatus for manufacturing molten steel of claim 29, wherein a transportation gas tube, which divides the reformed exhaust gas from which CO₂ is removed and which supplies the reformed exhaust gas to the melter-gasifier as carrier gas for transporting dust separated in the cyclone, is connected to the rear end of the cyclone.

31. The apparatus for manufacturing molten steel of claim 25, wherein the multi-stage fluidized-bed reactor unit comprises:
a first preheating reactor which preheats the iron-containing mixture at a temperature of 400 to 500°C;
a second preheating reactor which is connected to the first preheating reactor and which re-preheats the preheated iron-containing mixture at a temperature of 600 to 700°C;
a pre-reducing reactor which is connected to the second preheating reactor and which pre-reduces the re-preheated iron-containing mixture at a temperature of 700 to 800°C; and
a final reducing reactor which is connected to the pre-reducing reactor and
which finally reduces the pre-reduced iron-containing mixture at a temperature of 770 to 850°C.

32. The apparatus for manufacturing molten steel of claim 31, wherein oxygen burners are disposed between the second pre-heating furnace and the pre-reducing reactor and between the pre-reducing furnace and the final reducing reactor, and supply the reducing coal gas to each of the second pre-heating reactor and the pre-reducing reactor after heating the reducing coal gas.

33. The apparatus for manufacturing molten steel of claim 31, wherein the reducing-coal-gas supply tube is connected to the final reducing reactor.

34. The apparatus for manufacturing molten steel of claim 25, further comprising a purging-coal-gas supply tube for purging the multi-stage fluidized-bed reactor unit by dividing the reformed exhaust gas flow from which CO₂ is removed and by supplying the reformed exhaust gas to each of the fluidized-bed reactors.

35. The apparatus for manufacturing molten steel of claim 25, further comprising an exhaust-gas-bypassing circulation tube which is connected to the multi-stage fluidized-bed reactor unit and which supplies the total amount of exhaust gas exhausted from the multi-stage fluidized-bed reactor unit to the multi-stage fluidized-bed reactor unit.

36. The apparatus for manufacturing molten steel of claim 25, further comprising a coal gas re-supplying tube which divides reformed exhaust gas flow from which CO₂ is removed and supplies it into the melter-gasifier together with oxygen during the time of supplying oxygen thereto.

37. An integrated steel mill comprising:
an apparatus for manufacturing molten iron according to claim 25,
an apparatus for manufacturing steel, which is connected to the apparatus for manufacturing molten steel and which manufactures molten steel by removing impurities and carbon from the molten iron;
a thin slab casting machine which is connected to the apparatus for manufacturing steel and which continuously casts the molten steel supplied from the apparatus into thin slab;
a hot-roiling machine which is connected to the thin slab casting machine and which manufactures hot-rolled plate by hot-rolling the thin slab discharged from the thin slab casting machine.

38. The integrated steel mill of claim 37, wherein the apparatus for manufacturing steel comprises:
a molten-iron pre-treating apparatus which is connected to the apparatus for manufacturing molten iron and which removes phosphorus and sulfur contained in the molten iron discharged form the apparatus;
a decarbonization apparatus which is connected to the molten iron pre-treating apparatus and which removes carbon and impurities contained in the molten iron discharged from the molten iron pre-treating apparatus; and
a ladle which is connected to the decarbonization apparatus and which manufactures molten steel by refining again the molten iron discharged from the decarbonization apparatus

39. The integrated steel mill of claim 38, further comprising a second multi-stage fluldized-bed reactor unit which divides reformed discharged gas from which CO₂ is removed and which converts fine iron-containing ores to a reduced material; and
a second briquette-manufacturing apparatus which is connected to the first multi-stage fluidized-bed reactor unit and which manufactures briquettes by briquetting the reduced material at a high temperature;
wherein the second briquette-manufacturing apparatus supplies the reduced iron briquettes to a decarbonization apparatus.

40. The integrated steel mill of claim 39, wherein the second multi-stage fluidized-bed reactor unit comprises;
a preheating reactor for preheating the fine iron-containing ores at a temperature of 600 to 700°C;
a pre-reducing reactor which is connected to the pre-heating reactor and pre-reduces the preheated fine iron-containing ores at a temperature of 700 to 800°C; and
a final reducing reactor which is connected to the pre-reducing reactor and finally reduces the pre-reduced fine iron-containing ores at a temperature of 770 to 850°C.

## Patentansprüche

1. Verfahren zur Herstellung von schmelzflüssigem Eisen, umfassend die folgenden Schritte:
Herstellung eines eisenhaltigen Gemisches durch das Vermischen von Feinanteil von Eisen enthaltenden Erzen und ergänzenden Rohmaterialien sowie Trocknung des sich ergebenden Gemisches;
Umwandlung des eisenhaltigen Gemisches in ein reduziertes Material durch Reduzieren und Sintern, während das eisenhaltige Gemisch eine mehrstufige Wirbelschichtreaktoreinheit durchläuft, wobei die Wirbelschichtreaktoren in Sequenz miteinander verbunden sind;
Herstellung von Briketts, indem das reduzierte Material bei hoher Temperatur brikettiert wird;
Bildung eines gepackten Kohlebettes, indem Grobkohle und Briketts, die aus brikettierender feiner Kohle hergestellt sind, in einen Schmelzvergaser eingebracht werden und für das Schmelzen der Briketts als Wärmequelle dienen;
Herstellung von schmelzflüssigem Eisen, indem die Briketts in den Schmelzvergaser eingebracht werden, der mit der mehrstufigen Wirbelschichtreaktoreinheit verbunden ist, und indem Sauerstoff in den Schmelzvergaser eingeleitet wird;
Zuführung des abgegebenen reduzierten Kohlegases vom Schmelzvergaser in die mehrstufige Wirbelschichtreaktoreinheit;
Trennung des Abgasflusses, der durch die mehrstufige Wirbelschichtreaktoreinheit ausgeblasen wird, und Entfernung von CO₂ aus dem Abgas;
Vermischung des reformierten Abgases, aus welchem CO₂ entfernt wurde, mit dem reduzierenden Kohlegas, das aus dem Schmelzvergaser abgegeben wird; sowie Erwärmung des reduzierenden Kohlegases, das mit dem reformierten Abgas vermischt wird, bevor es in die mehrstufige Wirbelschichtreaktoreinheit zugeführt wird, um eine Temperatur des reduzierenden Kohlegases auf eine Temperatur anzupassen, die erforderlich ist, um das eisenhaltige Gemisch in der mehrstufigen Wirbelschichtreaktoreinheit zu reduzieren.

2. Verfahren nach Anspruch 1, worin das reformierte Abgas durch einen Sauerstoffbrenner erhitzt wird, in einem Erhitzungschritt, bevor das mit dem reformierten Abgas vermischte reduzierende Kohlengas der mehrstufigen Wirbelschichtreaktoreinheit zugeführt wird.

3. Verfahren nach Anspruch 1, worin im Schritt des Trennens des Abgasflusses, welcher durch die mehrstufige Wirbelschichtreaktoreinheit ausgeblasen wird, sowie des Entfernens von CO₂ aus dem Abgas, die Menge des abgetrennten Abgases vorzugsweise 60 Vol.-% der Gesamtmenge des Abgases beträgt, das aus den Wirbelschichtreaktoren ausgeblasen wird.

4. Verfahren nach Anspruch 1, worin die Menge des reformierten Abgases in einem Bereich von 1050 Nm³ bis 1400 Nm³ pro Tonne der Eisen enthaltenden Feinerze gehalten wird.

5. Verfahren nach Anspruch 1, worin im Schritt des Mischens des reformierten Abgases, von welchem CO₂ entfernt ist, mit dem reduzierenden Kohlegas, das aus dem Schmelzvergaser abgegeben wird, eine Menge von im reformierten Abgas enthaltenem CO₂ vorzugsweise 3,0 Vol.-% oder weniger beträgt.

6. Verfahren nach Anspruch 1, worin das abgetrennte Abgas im Schritt des Trennens des von der mehrstufigen Wirbelschichtreaktoreinheit abgegebenen Abgases und des Entfernens von CO₂ aus dem Abgas unter Druck gesetzt wird.

7. Verfahren nach Anspruch 1, weiters umfassend einen Schritt des Trennens des Abgasflusses, der durch die mehrstufige Wirhelschichtreaktoreinheir ausgeblasen wird, und des Entfernens von Teer aus dem Abgas, vor dem Schritt des Trennens des Abgasflusses, der von der mehrstufigen Wirhelschichtreaktoreinheir ausgeblasen wird, und des Entfernens von CO₂ aus dem Abgas.

8. Verfahren nach Anspruch 1, worin im Schritt des Mischens des reformierten Abgases, aus welchem CO₂ entfernt ist, mit dem reduzierenden Kohlegas, das aus dem Schmelzvergaser abgegeben wird, das reformierte Gas an einem vorderen Ende eines Zyklons gemischt wird, der aus dem Schmelzvergaser abgegebenen Staub in den Schmelzvergaser lädt.

9. Verfahren nach Anspruch 8, worin der reformierte Abgasfluss, aus welchem CO₂ entfernt ist, geteilt und als Trägergas für das Laden von im Zyklon getrenntem Staub in den Schmelzvergaser verwendet wird.

10. Verfahren nach Anspruch 1, weiters umfassend einen Schritt des Vorbeileitens einer Gesamtmenge an Abgas, das aus der mehrstufigen Wirbelschichtreaktoreinheit ausgeblasen wird, und des Zuführens dessen zur mehrstufigen Wirbelschichtreaktoreinheit, während der Zeit, in welcher der Schmelzvergaser geschlossen oder bevor der Schmelzvergaser betrieben wird.

11. Verfahren nach Anspruch 1, weiters umfassend die folgenden Schritte:
Trennen des Abgasflusses, der durch die mehrstufige Wirbelschichtreaktoreinheit ausgeblasen wird, und Entfernen von CO₂ aus dem Abgasfluss; und
Reinigen der mehrstufigen Wirbelschichtreaktoreinheit, indem der reformierte Abgasfluss, aus welchem CO₂ entfernt ist, geteilt und das reformierte Abgas zu jedem der Wirbelschichtreaktoren zugeführt wird.

12. Verfahren nach Anspruch 11, worin eine Menge an im reduzierenden Kohlegas enthaltenen Stickstoff 10,0 Vol.-% oder weniger beträgt.

13. Verfahren nach Anspruch 1, weiters umfassend den folgenden Schritt:
Trennen des Abgasflusses, der durch die mehrstufige Wirbelschichtreaktoreinheit ausgeblasen wird und Entfernen von im Abgasfluss enthaltenen CO₂, und Abtrennen des reformierten Abgasflusses, aus dem CO₂ entfernt ist, sowie Zuführen dessen in den Schmelzvergaser gemeinsam mit Sauerstoff während der Zeit, in der Sauerstoff dorthin zugeführt wird.

14. Verfahren nach Anspruch 1, worin der Schritt des Umwandelns des eisenhaltigen Gemisches in ein reduziertes Material wie folgt umfasst:
einen ersten Schritt des Vorerhitzens des eisenhaltigen Gemisches auf eine Temperatur von 400 bis 500°C;
einen zweiten Schritt des Wieder-Vorerhitzens des vorerhitzten eisenhaltigen Gemisches auf eine Temperatur von 600 bis 700°C;
einen dritten Schritt des Vorreduzierens des wieder-vorerhitzten eisenhaltigen Gemisches auf eine Temperatur von 700 bis 800°C; und
einen vierten Schritt des Endreduzierens des vorreduzierten eisenhaltigen Gemisches auf eine Temperatur von 770 bis 850°C.

15. Verfahren nach Anspruch 14, worin ein Oxidationsgrad in den ersten und zweiten Schritten 25% oder weniger beträgt;
ein Oxidationsgrad im dritten Schritt 35 bis 50% beträgt;
ein Oxidationsgrad im vierten Schritt 45% oder mehr beträgt,
wobei hier der Oxidationsgrad durch die folgende Gleichung erhalten wird: (CO₂ Vol.-% + H₂O Vol.-%)/(CO Vol.-% + H₂ Vol.% + CO₂ Vol.-% + H₂O Vol.-%) x 100; CO, CO₂, H₂O und H₂ sind Gase, welche alle im reduzierenden Gas enthalten sind.

16. Verfahren nach Anspruch 14, worin der zweite und der dritte Schritt einen Schritt des Zuführens von Sauerstoff umfassen.

17. Verfahren nach Anspruch 1, worin im Schritt des Herstellens der Briketts bei einer hohen Temperatur die Korngröße der Briketts innerhalb eines Bereichs von 3 mm bis 30 mm liegt.

18. Verfahren nach Anspruch 1, worin im Schritt des Bildens des gepackten Kohlebettes die Korngröße des Briketts in einem Bereich von 30 mm bis 50 mm liegt.

19. Integriertes Stahlerzeugungsverfahren, umfassend die folgenden Schritte:
Herstellen von schmelzflüssigem Eisen durch Verwendung des Verfahrens zur Herstellung von schmelzflüssigem Eisen gemäß Anspruch 1;
Herstellen von schmelzflüssigem Stahl durch Entfernen von Unreinheiten und dem im schmelzflüssigen Eisen enthaltenen Kohlenstoff;
Stranggießen von schmelzflüssigem Eisen in dünne Platten;
Warmwalzen der dünnen Platte zur Erzeugung einer warmgewalzten Stahlplatte.

20. Integriertes Stahlerzeugungsverfahren gemäß Anspruch 19, worin im Schritt des Stranggießens des schmelzflüssigen Eisens in eine dünne Platte der schmelzflüssige Stahl in dünne Platten mit einer Dicke von 40 mm bis 100 mm stranggegossen wird.

21. Integriertes Stahlerzeugungsverfahren gemäß Anspruch 19, worin im Schritt des Warmwalzens der dünnen Platte in eine warmgewalzte Stahlplatte die warmgewalzte Stahlplatte mit einer Dicke von 0,8 mm bis 2,0 mm ausgeführt wird.

22. Integriertes Stahlerzeugungsverfahren gemäß Anspruch 19, worin der Schritt des Herstellens von schmelzflüssigem Stahl die folgenden Schritte umfasst:
Vorbehandeln des schmelzflüssigen Eisens, um im schmelzflüssigen Eisen enthaltenen Phosphor und Schwefel zu entfernen;
Entfernen von im schmelzflüssigen Eisen enthaltenen Kohlenstoff und Unreinheiten, indem Sauerstoff in das schmelzflüssige Eisen zugeführt wird; und
Herstellen des schmelzflüssigen Stahls, indem Unreinheiten und gelöstes Gas durch ein zweites Verfeinern des schmelzflüssigen Eisens entfernt werden.

23. Integriertes Stahlerzeugungsverfahren gemäß Anspruch 22, weiters umfassend die folgenden Schritte:
Umwandeln des eisenhaltigen Feinerzes in reduziertes Eisen, indem die eisenhaltigen Feinanteile der Erze reduziert werden, während es durch eine mehrstufige Wirbelschichtreaktoreinheit hindurchgeschickt wird, wobei die Reaktoren in Serie miteinander verbunden sind; und
Herstellen von Briketts aus reduziertem Eisen, indem das reduzierte Eisen bei hoher Temperatur brikettiert wird,
worin im Schritt des Entfernens von im schmelzflüssigen Eisen enthaltenen Kohlenstoff und Unreinheiten die Briketts aus reduziertem Eisen und das geschmolzene Eisen vermischt werden und daraus Kohlenstoff und Unreinheiten entfernt werden.

24. Integriertes Stahlerzeugungsverfahren gemäß Anspruch 23, worin der Schritt des Umwandelns des eisenhaltigen Feinanteils der Erze in das reduzierte Eisen die folgenden Schritte umfasst:
Vorerhitzen der eisenhaltigen Feinerze bei einer Temperatur von 600 bis 700°C;
Vorreduzieren der vorerhitzten eisenhaltigen Feinerze bei einer Temperatur von 700 bis 800°C; und
Endreduzieren der vorreduzierten eisenhaltigen Feinerze bei einer Temperatur von 770 bis 850°C, um sie in reduziertes Eisen umzuwandeln.

25. Vorrichtung zur Herstellung von schmelzflüssigem Eisen, umfassend:
eine mehrstufige Wirbelschichtreaktoreinheit zum Umwandeln von eisenhaltigen Feinerzen, die vermischt und getrocknet werden, und ergänzenden Rohmaterialien in reduziertes Material;
eine Vorrichtung zur Herstellung von Briketts, die mit einer mehrstufigen Wirbelschichtreaktoreinheit verbunden ist und Briketts erzeugt, indem das reduzierte Material bei einer hohen Temperatur brikettiert wird;
einen Brikettierer zum Herstellen eines Briketts, der beim Brikettieren von Feinkohle als Wärmequelle verwendet wird;
einen Schmelzvergaser zum Erzeugen von schmelzflüssigem Stahl, in welchen Grobkohle und die vom Brikettierer erzeugten Briketts geladen werden und ein gepacktes Kohlebett gebildet wird, in welches das reduzierte Material von der Vorrichtung zur Erzeugung der Briketts eingeführt und Sauerstoff zugeführt wird;
ein Rohr zur Zufuhr von reduzierendem Kohlegas, um das reduzierende Kohlegas, das vom Schmelzvergaser abgegeben wird, in die mehrstufige Wirbelschichtreaktoreinheit zuzuführen; und
ein Rohr zur Zufuhr von reformiertem Abgas, welches den Abgasfluss, der von der mehrstufigen Wirbelschichtreaktoreinheit ausgeblasen wird, teilt und reformiertes Abgas, aus welchem CO₂ entfernt ist, zuführt, wobei ein Sauerstoffbrenner auf dem Rohr zur Zufuhr des reduzierenden Kohlegases montiert ist, um das mit dem reformierten Abgas vermischte reduzierende Kohlegas zu erhitzen, bevor es der mehrstufigen Wirbelschichtreaktoreinheit zugeführt wird.

26. Vorrichtung zur Erzeugung von schmelzflüssigem Eisen gemäß Anspruch 25, worin das Rohr zur Zufuhr von reformiertem Abgas einen Gasreformer zum Entfernen von im Abgas enthaltenen CO₂ umfasst, das durch die mehrstufige Wirbelschichtreaktoreinheit ausgeblasen und abgetrennt wird.

27. Vorrichtung zur Erzeugung von schmelzflüssigem Eisen gemäß Anspruch 25, worin das Rohr zur Zufuhr von reformiertem Abgas einen Teerentferner zum Entfernen von Teer aus dem Abgas umfasst, das durch die mehrstufige Wirbelschichtreaktoreinheit ausgeblasen und abgetrennt wird.

28. Vorrichtung zur Erzeugung von schmelzflüssigem Eisen gemäß Anspruch 27, worin das Rohr zur Zufuhr von reformiertem Abgas einen Kompressor zum Komprimieren des Abgases umfasst, das durch die mehrstufige Wirbelschichtreaktoreinheit ausgeblasen und abgetrennt wird, und worin der Teerentferner an einem vorderen Ende des Kompressors montiert ist.

29. Vorrichtung zum Erzeugen von schmelzflüssigem Eisen gemäß Anspruch 25, worin ein Zyklon, der vom Schmelzvergaser abgegebenen Staub in den Schmelzvergaser zuführt, am Schmelzvergaser angebracht ist und worin das Rohr zur Zufuhr von reformiertem Abgas an einem vorderen Ende des Zyklons verbunden ist.

30. Vorrichtung zum Erzeugen von schmelzflüssigem Eisen gemäß Anspruch 29, worin ein Gastransportrohr, welches das reformierte Abgas, aus welchem CO₂ entfernt ist, abtrennt und das reformierte Abgas zum Schmelzvergaser als Trägergas zum Transportieren von im Zyklon geteilten Staub zuführt, mit dem hinteren Ende des Zyklons verbunden ist.

31. Vorrichtung zum Erzeugen von schmelzflüssigem Eisen gemäß Anspruch 25, worin die mehrstufige Wirbelschichtreaktoreinheit wie folgt umfasst:
einen ersten vorerhitzenden Reaktor, der die eisenhaltige Mischung auf eine Temperatur von 400 bis 500°C vorerhitzt;
einen zweiten vorerhitzenden Reaktor, der mit dem ersten vorerhitzenden Reaktor verbunden ist und die vorerhitzte eisenhaltige Mischung auf eine Temperatur von 600 bis 700°C erhitzt;
einen vorreduzierenden Reaktor, der mit dem zweiten vorerhitzenden Reaktor verbunden ist und das wieder-vorerhitzte eisenhaltige Gemisch bei einer Temperatur von 700 bis 800°C vorreduziert; und
einen endreduzierenden Reaktor, der mit dem vorreduzierenden Reaktor verbunden ist und die vorreduzierte eisenhaltige Mischung bei einer Temperatur von 770 bis 850°C endreduziert.

32. Vorrichtung zum Erzeugen von schmelzflüssigem Stahl gemäß Anspruch 31, worin Sauerstoffbrenner zwischen dem zweiten vorerhitzenden Ofen und dem vorreduzierenden Reaktor sowie zwischen dem vorreduzierenden Ofen und dem endreduzierenden Reaktor angeordnet sind und das reduzierende Kohlegas zu jedem der zweiten vorerhitzenden Reaktoren und dem vorreduzierenden Reaktor zuführen, nachdem das reduzierende Kohlegas erhitzt worden ist.

33. Vorrichtung zum Erzeugen von schmelzflüssigem Stahl gemäß Anspruch 31, worin das Rohr zur Zufuhr des reduzierenden Kohlegases an den endreduzierenden Reaktor angeschlossen ist.

34. Vorrichtung zum Erzeugen von schmelzflüssigem Stahl gemäß Anspruch 25, weiters umfassend ein Reinigungsrohr zur Zufuhr des Kohlegases zum Reinigen der mehrstufigen Wirbelschichtreaktoreinheit, indem der reformierte Abgasfluss, aus welchem CO₂ entfernt ist, geteilt und das reformierte Abgas zu jedem der Wirbelschichtreaktoren zugeführt wird.

35. Vorrichtung zum Erzeugen von schmelzflüssigem Stahl gemäß Anspruch 25, weiters umfassend ein Zirkulationsrohr zum Vorbeiführen des Abgases, das mit der mehrstufigen Wirbelschichtreaktoreinheit verbunden ist und die Gesamtmenge Abgas, die von der mehrstufigen Wirbelschichtreaktoreinheit abgegeben wird, zur mehrstufigen Wirbelschichtreaktoreinheit zuführt.

36. Vorrichtung zum Erzeugen von schmelzflüssigem Stahl gemäß Anspruch 25, weiters umfassend ein Rohr für das Zurückführen eines Kohlegases, das den reformierten Abgasfluss, aus welchem CO₂ entfernt ist, teilt und es gemeinsam mit Sauerstoff in den Schmelzvergaser zuführt, während gleichzeitig Sauerstoff zugeführt wird.

37. Integriertes Stahlwerk, umfassend:
eine Vorrichtung zum Erzeugen von schmelzflüssigem Eisen gemäß Anspruch 25,
eine Vorrichtung zum Erzeugen von Stahl, die mit der Vorrichtung zum Erzeugen von schmelzflüssigem Stahl verbunden ist und schmelzflüssigen Stahl erzeugt, indem sie Unreinheiten und Kohlenstoff aus dem geschmolzenen Eisen entfernt;
eine Gussmaschine für dünne Platten, die mit der Vorrichtung zum Erzeugen von Stahl verbunden ist und den schmelzflüssigen Stahl, der von der Vorrichtung zugeführt wird, in dünne Platten stranggießt;
eine Warmwalzmaschine, die mit der Gussmaschine für dünne Platten verbunden ist und warmgewalzte Platten erzeugt, indem die von der Grussmaschine für dünne Platten abgegebene dünne Platte warmgewalzt wird.

38. Integriertes Stahlwerk gemäß Anspruch 37, worin die Vorrichtung zum Erzeugen von Stahl wie folgt umfasst:
eine Vorrichtung zum Vorbehandeln von schmelzflüssigem Eisen, die mit der Vorrichtung zum Erzeugen von schmelzflüssigem Eisen verbunden ist und Phosphor und
Schwefel, die im von der Vorrichtung abgegebenen schmelzflüssigen Eisen enthalten sind, entfernt;
eine Entkohlungsvorrichtung, die mit der Vorrichtung zum Vorbehandeln von schmelzflüssigem Eisen verbunden ist und Kohlenstoff und Unreinheiten, die im von der Vorrichtung zum Vorbehandeln von schmelzflüssigem Eisen abgegebenen schmelzflüssigen Eisen enthalten sind, entfernt;
eine Pfanne, die mit der Entkohlungsvorrichtung verbunden ist und schmelzflüssigen Stahl erzeugt, indem das schmelzflüssige Eisen, das von der Entkohlungsvorrichtung abgegeben wird, erneut raffiniert wird.

39. Integriertes Stahlwerk gemäß Anspruch 38, weiters umfassend eine zweite mehrstufige Wirbelschichtreaktoreinheit, die das reformierte abgegebene Gas, aus welchem CO₂ entfernt ist, teilt und die Eisen enthaltenden Feinerze in ein reduziertes Material umwandelt; und
eine zweite Vorrichtung zum Erzeugen von Briketts, die mit der ersten mehrstufige Wirbelschichtreaktoreinheit verbunden ist und Briketts erzeugt, indem das reduzierte Material bei einer hohen Temperatur brikettiert wird;
worin die zweite Vorrichtung zum Erzeugen von Briketts die reduzierten Eisenbriketts in eine Entkohlungsvorrichtung zuführt.

40. Integriertes Stahlwerk gemäß Anspruch 39, worin die zweite mehrstufige Wirbelschichtreaktoreinheit umfasst:
einen vorerhitzenden Reaktor zum Vorerhitzen der eisenhaltigen Feinerze auf eine Temperatur von 600 bis 700°C;
einen vorreduzierenden Reaktor, der mit dem vorerhitzenden Reaktor verbunden ist und die vorerhitzten eisenhaltigen Feinerze bei einer Temperatur von 700 bis 800°C vorreduziert; und
einen endreduzierenden Reaktor, der mit dem vorreduzierenden Reaktor verbunden ist und die vorreduzierten, Eisen enthaltenden Feinerze bei einer Temperatur von 770 bis 850°C endreduziert.

## Revendications

1. Procédé de fabrication de fonte liquide, comprenant les étapes consistant à :
- fabriquer un mélange contenant du fer en mélangeant un fin minerai contenant du fer et d'autres matières premières et en séchant le mélange résultant ;
- convertir le mélange contenant du fer en un matériau réduit par réduction et frittage en faisant passer le mélange contenant du fer à travers l'unité de réacteur multi-étages à lit fluidifié, les réacteurs à lit fluidifié étant séquentiellement reliés les uns aux autres ;
- fabriquer des briquettes à partir du matériau réduit à haute température ;
- former un lit chargé en charbon par chargement de morceaux de charbon et de briquettes qui sont réalisées à partir de fins morceaux de charbon, à l'intérieur d'un gazéificateur de fusion en tant que sources de chaleur pour faire fondre les briquettes ;
- fabriquer de la fonte liquide en chargeant les briquettes à l'intérieur du gazéificateur de fusion relié à l'unité de réacteur multi-étages à lit fluidifié et en fournissant de l'oxygène à l'intérieur du gazéificateur de fusion ;
- amener du gaz de charbon de réduction en provenance du gazéificateur de fusion vers l'unité de réacteur multi-étages à lit fluidifié ;
- séparé le flux de gaz d'échappement qui est évacué à travers l'unité de réacteur multi-étages à lit fluidifié et éliminer le CO₂ des gaz d'échappement ;
- mélanger le gaz d'échappement reformé à partir duquel le CO₂ est éliminé avec le gaz de charbon de réduction qui est évacué du gazéificateur de fusion ; et
- chauffer le gaz de charbon de réduction mélangé avec le gaz d'échappement reformé avant de le fournir à l'unité de réacteur multi-étages à lit fluidifié pour ajuster la température du gaz de charbon de réduction à une température requise pour réduire le mélange contenant du fer dans l'unité de réacteur multi-étages à lit fluidifié.

2. Procédé selon la revendication 1, dans lequel le gaz d'échappement reformé est chauffé en utilisant un brûleur à oxygène, durant l'étape de chauffage avant de fournir le gaz de charbon de réduction mélangé avec le gaz d'échappement reformé à l'unité de réacteur multi-étages à lit fluidifié.

3. Procédé selon la revendication 1, dans lequel dans l'étape de séparation du flux de gaz d'échappement qui est évacué à travers l'unité du réacteur multi-étages à lit fluidifié et d'élimination du CO₂ du gaz d'échappement, une quantité de gaz d'échappement séparé est préférentiellement de 60 % en volume d'une quantité totale du gaz d'échappement qui est évacuée à partir des réacteurs à lit fluidifié.

4. Procédé selon la revendication 1, dans lequel la quantité de gaz d'échappement reformé est maintenue entre 1050 Nm³ et 1400 Nm³ par tonne de fin minerai contenant du fer.

5. Procédé selon la revendication 1, dans lequel durant l'étape de mélange du gaz d'échappement reformé à partir duquel le CO₂ est éliminé, avec le gaz de charbon de réduction qui est évacué du gazéificateur de fusion, une quantité de CO₂ contenu dans le gaz d'échappement reformé est préférentiellement de 3,0 % en volume ou moins.

6. Procédé selon la revendication 1, dans lequel le gaz d'échappement séparé est compressé durant l'étape de séparation du flux de gaz d'échappement évacué de l'unité de réacteur multi-étages à lit fluidifié et d'élimination du CO₂ dans le gaz évacué.

7. Procédé selon la revendication 1, comprenant en outre l'étape de séparation du flux de gaz d'échappement qui évacué à travers l'unité du réacteur multi-étages fluidifié et d'élimination du goudron du gaz d'échappement, avant l'étape de séparation du flux de gaz d'échappement qui est évacué de l'unité de réacteur mutli-étages à lit fluidifié et l'élimination du CO₂ du gaz d'échappement.

8. Procédé selon la revendication 1, dans lequel, durant l'étape de mélange du gaz d'échappement reformé à partir duquel le CO₂ est éliminé avec le gaz de charbon de réduction qui est évacué du gazéificateur de fusion, le gaz d'échappement reformé est mélangé à une extrémité avant d'un cyclone qui charge les poussières évacués du gazéificateur de fusion vers l'intérieur du gazéificateur de fusion.

9. Procédé selon la revendication 8, dans lequel le flux de gaz reformé à partir duquel le CO₂ est éliminé est séparé et est utilisé en tant que transporteur de gaz pour charger la poussière séparée au niveau du cyclone à l'intérieur du gazéificateur de fusion.

10. Procédé selon la revendication 1, comprenant en outre l'étape de contournement d'une quantité totale de gaz d'échappement qui est évacué de l'unité de réacteur multi-étages à lit fluidifié et la fournir à une unité de réacteur multi-étages à lit fluidifié durant le temps de l'arrêt du gazéificateur de fusion ou avant le fonctionnement du gazéificateur de fusion.

11. Procédé selon la revendication 1, comprenant en outre les étapes consistant à :
- séparer le flux de gaz d'échappement qui est évacué à travers l'unité de réacteur multi-étages à lit fluidifié et éliminer le CO₂ contenu dans le flux de gaz d'échappement ; et
- purger l'unité de réacteur multi-étages à lit fluidifié en séparant le flux de gaz d'échappement reformé à partir duquel le CO₂ est éliminé et fournir le gaz d'échappement reformé à chacun des réacteurs à lit fluidifié.

12. Procédé selon la revendication 11, dans lequel une quantité d'azote contenue dans le gaz de charbon de réduction est de 10,0 % en volume ou moins.

13. Procédé selon la revendication 1, comprenant en outre les étapes consistant à :
- séparer le flux de gaz d'échappement qui est évacué à travers l'unité de réacteur multi-étages à lit fluidifié et éliminer le CO₂ contenu dans le flux de gaz d'échappement, et séparer le flux de gaz d'échappement reformé à partir duquel le CO₂ est éliminé et le fournir à l'intérieur du gazéificateur de fusion avec de l'oxygène durant le temps d'alimentation en oxygène de celui-ci.

14. Procédé selon la revendication 1, dans lequel l'étape de conversion du mélange contenant du fer en un matériau réduit comprend :
- une première étape de préchauffage du mélange contenant du fer à une température entre 400 et 500°C ;
- une seconde étape de re-préchauffage du mélange contenant du fer préchauffé à une température entre 700 et 800°C ;
- une troisième étape de pré-réduction du mélange contenant du fer re-préchauffé à une température entre entre 700 et 800°C ; et
- une quatrième étape de réduction finale du mélange contenant du fer pré-réduit à une température entre 770 et 850°C.

15. Procédé selon la revendication 14, dans lequel un degré d'oxydation lors des première et seconde étapes est de 25% ou moins ;
- un degré d'oxydation à la troisième étape est compris entre 35 et 50% ;
- on degré d'oxydation à la quatrième étape est compris de 45% ou plus ;
- ici, le degré d'oxydation est obtenu en utilisant l'équation suivante : (% en volume de CO₂ + % en volume de H₂O) / (% en volume de CO + % en volume de H₂ + % en volume de CO₂ + % en volume de H₂O) × 100 ; CO, CO₂, H₂O et H₂ étant des gaz, chacun étant contenu dans le gaz réduit.

16. Procédé selon la revendication 14, dans lequel les seconde et troisième étapes comprennent une étape d'alimentation en oxygène.

17. Procédé selon la revendication 1, dans lequel, durant l'étape de fabrication des briquettes à une haute température, la dimension des grains des briquettes est comprise entre 3 mm et 30 mm.

18. Procédé selon la revendication 1, dans lequel, durant l'étape de formation du lit chargé en charbon, la dimension des grains des briquettes est comprise entre 30 mm et 50 mm.

19. Procédé de fabrication d'acier intégré, comprenant les étape consistant à :
- fabriquer de la fonte liquide en utilisant le procédé de fabrication de fonte liquide selon la revendication 1 ;
- fabriquer de l'acier liquide en supprimant les impuretés et le carbone contenus dans la fonte liquide ;
- mouler de manière continue la fonte liquide en une brame fine ;
- laminage à chaud de la fine brame pour faire une plaque d'acier laminé à chaud.

20. Procédé de fabrication d'acier intégré selon la revendication 19, dans lequel, à l'étape de moulage en continu de la fonte liquide en une brame fine, la fonte liquide est moulée en continu en une brame fine ayant une épaisseur entre 40 mm et 100 mm.

21. Procédé de fabrication d'acier intégré selon la revendication 19, dans lequel, à l'étape de laminage à chaud de la brame fine pour faire une plaque d'acier laminé à chaud, la plaque laminée à chaud est réalisée de manière à avoir une épaisseur entre 0,8 mm et 2,0 mm.

22. Procédé de fabrication d'acier intégré selon la revendication 19, dans lequel l'étape de fabrication du fer fine comprend les étapes consistant à :
- pré-traiter la fonte liquide pour éliminer le phosphore et le soufre contenus dans la fonte liquide ;
- éliminer le carbone et les impuretés contenus dans la fonte liquide en fournissant de l'oxygène à l'intérieur de la fonte liquide; et
- fabriquer l'acier liquide en éliminant les impuretés et en dissolvant le gaz au moyen d'un second affinage de la fonte liquide.

23. Procédé de fabrication d'acier intégré selon la revendication 22, comprenant en outre les étapes consistant à :
- convertir le fin minerai contenant du fer en fer réduit en réduisant le fin minerai contenant du fer lorsqu'on le passe à travers l'unité de réacteur multi-étages à lit fluidifié, lesquels réacteurs sont séquentiellement reliés les uns aux autres, et
- dabriquer des briquettes de fer réduit en réalisant des briquettes de fer réduit à haute température,
- dans lequel, durant l'étape d'élimination du carbone et des impuretés contenus dans la fonte liquide, les briquettes de fer réduit et la fonte liquide sont mélangés, et le carbone et les impuretés sont éliminés du mélange.

24. Procédé de fabrication d'acier intégré selon la revendication 23, dans lequel l'étape de conversion des fins minerais contenant du fer en fer réduit comprend les étapes consistant à :
- préchauffer les fins minerais contenant du fer à une température comprise entre 600 et 700°C ;
- pré-réduire le fin minerai contenant du fer à une température comprise entre 600 et 700°C ;
- à faire une réduction finale des fins minerais contenant du fer à une température comprise entre 770 et 850°C pour le convertir en fer réduit.

25. Dispositif de fabrication de fonte liquide, comprenant :
- une unité de réacteur multi-étages à lit fluidifié pour convertir les fins minerais contenant du fer qui sont mélangés et séchés, et des matières premières additionnelles en matières réduites ;
- un dispositif de fabrication de briquette qui est relié à l'unité de réacteur multi-étages à lit fluidifié et qui fabrique les briquettes en réalisant des briquettes de matières réduites à haute température ;
- un dispositif pour fabriquer des briquettes, utilisé en tant que source de chaleur, en réalisant des briquettes à partir de charbon fin,
- un gazéificateur de fusion pour fabriquer de l'acier liquide, à l'intérieur duquel des morceaux de charbon et des briquettes fabriquées sont chargés et un lit tassé de charbon étant formé, et à l'intérieur duquel le matériau réduit est chargé à partir du dispositif de fabrication de briquettes et de l'oxygène est fourni ;
- un tube d'alimentation en gaz de charbon de réduction pour fournir le gaz de charbon de réduction évacué du gazéificateur de fusion à l'unité de réacteur multi-étages à lit fluidifié :
et
- un tube d'alimentation en gaz d'échappement reformé qui sépare le flux de gaz d'échappement qui est évacué de l'unité de réacteur multi-étages à lit fluidifié et fourni le gaz d'échappement reformé à partir duquel le CO₂ est éliminé,
- dans lequel un brûleur à oxygène est monté sur le tube d'alimentation en gaz de charbon de réduction pour chauffer le gaz de charbon de réduction mélangé avec le gaz d'échappement reformé, avant de le fournir à l'unité de réacteur multi-étages à lit fluidifié.

26. Dispositif de fabrication de fonte liquide selon la revendication 25, dans lequel le tube d'alimentation en gaz d'échappement reformé comprend un reformeur de gaz pour éliminer le CO2, contenu dans le gaz d'échappement, qui est évacué à travers l'unité de réacteur multi-étages à lit fluidifié et est séparé.

27. Dispositif de fabrication de fonte liquide selon la revendication 25, dans lequel le tube d'alimentation en gaz d'échappement reformé comprend un éliminateur de goudron pour éliminer le goudron du gaz d'échappement, qui est évacué à travers l'unité de réacteur à lit fluidifié et est séparé.

28. Dispositif de fabrication de fonte liquide selon la revendication 27, dans lequel le tube d'alimentation en gaz d'échappement reformé comprend un compresseur pour compresser le gaz d'échappement, qui est évacué à travers l'unité de réacteur à lit fluidifié et est séparé, et dans lequel l'éliminateur de goudron est monté à une extrémité avant du compresseur.

29. Dispositif de fabrication de fonte liquide selon la revendication 25, dans lequel un cyclone, qui charge les poussières évacués du gazéificateur de fusion vers le gazéificateur de fusion, est prévu avec le gazéificateur de fusion, et le tube d'alimentation en gaz d'échappement reformé est relié à une extrémité arrière du cyclone.

30. Dispositif de fabrication de fonte liquide selon la revendication 29, dans lequel le tube de transport de gaz, qui sépare le gaz d'échappement reformé à partir duquel le CO₂ est éliminé et qui fourni le gaz d'échappement reformé au gazéificateur de fusion en tant que gaz de transport pour transporter la poussière séparée dans le cyclone, est relié à l'extrémité arrière du cyclone.

31. Dispositif de fabrication de fonte liquide selon la revendication 25, dans lequel l'unité de réacteur multi-étages à lit fluidifié comprend :
- un premier réacteur de préchauffage qui préchauffe le mélange contenant du fer à une température comprise entre 400 et 500°C ;
- un second réacteur de préchauffage qui est relié au premier réacteur de préchauffage et qui préchauffe le mélange préchauffé contenant du fer à une température comprise entre 600 et 700°C ;
- un réacteur de pré-réduction qui est relié au second réacteur de préchauffage et qui pré-réduit le mélange re-préchauffé contenant du fer à une température comprise entre 700 et 800°C ; et
- un réacteur de réduction finale qui est relié au réacteur de pré-réduction et qui réduit de manière finale le mélange pré-réduit contenant du fer à une température comprise entre 770 et 850°C.

32. Dispositif de fabrication d'acier liquide selon la revendication 31, dans lequel les brûleurs à oxygène sont agencés entre le second four de préchauffage et le réacteur de pré-réduction et entre le four de pré-réduction et le réacteur de réduction finale, et fourni le gaz de charbon de réduction à chacun du second réacteur de préchauffage et du réacteur de pré-réduction après avoir chauffé le gaz de charbon réduit.

33. Dispositif de fabrication d'acier liquide selon la revendication 31, dans lequel le tube d'alimentation en gaz de charbon de réduction est relié au réacteur de réduction finale.

34. Dispositif de fabrication d'acier liquide selon la revendication 25, comprenant en outre une purge du tube d'alimentation en gaz de charbon pour purger l'unité de réacteur à lit fluidifié en séparant le flux de gaz d'échappement reformé à partir duquel le CO₂ est éliminé et en fournissant le gaz d'échappement reformé à chacun des réacteurs à lit fluidifié.

35. Dispositif de fabrication d'acier liquide selon la revendication 31, comprenant en outre un tube de circulation de contournement du gaz d'échappement qui est relié à l'unité de réacteur multi-étages à lit fluidifié et qui fourni la quantité totale de gaz d'échappement évacué de l'unité de réacteur multi-étages à lit fluidifié vers l'unité de réacteur multi-étages à lit fluidifié.

36. Dispositif de fabrication d'acier liquide selon la revendication 25, comprenant en outre un tube de ré-alimentation en gaz de charbon qui sépare le flux de gaz reformé à partir duquel le CO₂ est éliminé et le fourni à l'intérieur du gazéificateur de fusion avec de l'oxygène durant le temps d'alimentation en oxygène de celui-ci.

37. Aciérie intégrée comprenant
- un dispositif de fabrication de fonte liquide selon la revendication 25,
- un dispositif de fabrication d'acier, qui est relié au dispositif de fabrication d'acier liquide et qui fabrique de l'acier liquide en éliminant les impuretés et le carbone de la fonte liquide ;
- une machine pour le moulage de brames fines qui est reliée au dispositif de fabrication d'acier et qui moule en continu l'acier liquide fourni par le dispositif en des brames fines ;
- une machine pour le laminage à chaud qui est reliée à la machine de moulage en brames fines et qui fabrique une plaque laminée à chaud en laminant à chaud la brame fine déchargée de la machine à mouler des brames fines.

38. Aciérie intégrée dans lequel le dispositif de fabrication d'acier comprend :
- un dispositif de préchauffage de la fonte liquide qui est relié au dispositif de fabrication de fonte liquide et qui élimine le phosphore et le soufre contenus dans la fonte liquide déchargés du dispositif ;
- un dispositif de décarbonatation qui est relié au dispositif de préchauffage de la fonte liquide liquide et qui élimine le carbone et les impuretés contenus dans la fonte liquide déchargé du dispositif de pré-traitement de la fonte liquide ; et
- une poche qui est reliée au dispositif de décarbonatation et qui fabrique l'acier liquide en affinant de nouveau la fonte liquide déchargée à partir de l'appareil de décarbonatation.

39. Aciérie intégrée selon la revendication 38, comprenant en outre une seconde unité de réacteur multi-étages à lit fluidifié qui sépare le gaz déchargé reformé à partir duquel le CO₂ est éliminé et qui converti le fin minerai contenant du fer en matériau réduit ; et
- un second dispositif de fabrication de briquettes qui est relié à la première unité de réacteur multi-étages à lit fluidifié et qui fabrique des briquettes à partir du matériau réduit à haute température ;
- dans lequel le second dispositif de fabrication de briquettes fournit les briquettes de fer réduit au dispositif de décarbonatation.

40. Aciérie intégrée selon la revendication 39, dans lequel la seconde unité de réacteur multi-étages à lit fluidifié comprend :
- un réacteur de préchauffage pour préchauffer le fin minerai contenant du fer à une température comprise entre 600 et 700°C ;
- un réacteur de préréduction qui est relié au réacteur de préchauffage et pré-réduit le fin minerai contenant du fer à une température comprise entre 700 et 800°C et
- un réacteur de réduction finale qui est relié au réacteur de pré-réduction et réduit de manière finale le fin minerai contenant du fer à une température comprise entre 770 et 850°C.
